# EUROPÄISCHE PATENTSCHRIFT

(11) **EP 1 388 042 B1**
(45) Veröffentlichungstag und Bekanntmachung des Hinweises auf die Patenterteilung: **20.10.2010**
(21) Anmeldenummer: 02743011.5
(22) Anmeldetag: 14.05.2002
(51) Int. Cl.: G06F 3/12, H04N 1/387

(54) **VERFAHREN, GERÄTESYSTEM UND COMPUTERPROGRAMMSYSTEM ZUM VISUELLEN ÜBERPRÜFEN EINES DRUCKDATENSTROMS**
METHOD, EQUIPMENT SYSTEM AND COMPUTER PROGRAM SYSTEM FOR VISUALLY CHECKING A PRINT DATA FLOW
PROCEDE, SYSTEME D'APPAREILLAGE ET SYSTEME DE PROGRAMMES INFORMATIQUES PERMETTANT DE CONTROLER VISUELLEMENT UN FLUX DE DONNEES D'IMPRESSION

(30) Priorität: 14.05.2001 DE 10123411
(43) Veröffentlichungstag der Anmeldung: 11.02.2004
(73) Patentinhaber: OCE Printing Systems GmbH, 85586 Poing (DE)
(72) Erfinder: STODERSCHNIG, Albin, 81479 München (DE); SCHMIDT, Jörg, 81673 München (DE); THIERBACH, Enrico, 80339 München (DE)
(74) Vertreter: Schaumburg, Thoenes, Thurn, Landskron, Eckert
(86) Internationale Anmeldenummer: PCT/EP2002/005296
(87) Internationale Veröffentlichungsnummer: WO 2002/093353

(56) Entgegenhaltungen:
- WO-A-00/23276
- WO-A-01/77806
- WO-A-89/06396
- WO-A-99/12337
- DE-A- 19 921 120
- US-A- 5 625 766

## Beschreibung

Die Erfindung betrifft ein Verfahren, ein Gerätesystem und ein Computerprogrammsystem zum visuellen Überprüfen und Steuern eines Druckdatenstroms.

Derartige Druckdatenströme sind in einer Vielzahl von Druckdatensprachen bekannt. Beispielsweise ist in typischen Büro-Umgebungen das Druckdatenformat Printer, Language (PCL) üblich. Dies ist ein gängiges Ausgabeformat für Desktop-Publishing Systeme. Demgegenüber ist das Advanced Function Presentation (AFP) Druckdatenformat eher in einem Druckproduktionsumfeld (beispielsweise in Computer-Rechenzentren) üblich. Aufgrund zunehmender Vernetzung und der damit verbundenen Portierung von Druck- bzw. Dokumentendaten zwischen verschiedenen Computersystemen und deren Anwendungs-Programmen ergibt sich immer häufiger die Aufgabe, in einem Dokumenten-Ausgabesystem bzw. Drucksystem verschiedenste Druckdatenströme zu verarbeiten.

Aus der Veröffentlichung "The World of Printers", Dr. Gerd Goldmann (Hrsg.), Océ Printing Systems GmbH, Poing, 5. Ausgabe (November 2000) ISBN 3-00-001-081-5 ist im Kapitel 11 auf den Seiten 11-1 bis 11-20 ein sog. PRISMApro Server-System bekannt, mit dem eine Vielzahl von Druckdatenströmen auf einer einheitlichen Druckproduktionssteuerungsplattform verarbeitbar sind.

Zur Erstellung und Kontrolle von Dokumenten ist das sog. What you see is what you get-Prinzip (WYSIWYG) bekannt. Dokumente werden dabei nach vorgegebenen Konventionen erstellt, mit dem Ziel, bereits beim Erstellen der Dokumente eine Darstellung der Dokumente zu erhalten, die der späteren Wiedergabe des Dokuments auf einem Aufzeichnungsträger entspricht.

In komplexen Druckproduktionssystemen stößt die WYSIWYG-Zielsetzung insbesondere dann an Grenzen, wenn Dokumentendaten in einer Vielzahl von Sprachvarianten verarbeitet werden müssen. Hinzu kommt, daß Produktions-Drucksysteme eine Vielzahl von Einstellmöglichkeiten besitzen, die die jeweilige, detaillierte Darstellung auf dem Ausgabemedium beeinflussen können.

Aus der US-A-5,940,584 und aus der WO-A-99/12 337 sind Verfahren und Geräte bekannt, mit denen Druckdaten pixelgenau in ein Archivierungssystem übernehmbar sind. Dabei werden die Druckdaten aus einem Druckdatenformat in ein pixelbasiertes (gerastertes) Bildformat konvertiert und diese konvertierten Daten wahlweise der punktweisen Steuerungseinheit des Druckers und/oder einem Archivierungssystem zugeführt. Mit diesem System ist es deshalb möglich, eine punktgenaue Kopie gedruckter Daten in einem Archivspeicher abzulegen. Zusätzlich zu den Bilddaten werden Indizierungsdaten gebildet, welche im Archivierungssystem gemeinsam mit den Bilddaten abgespeichert werden, um ein späteres Wiederauffinden der Dokumente im Archivsystem zu ermöglichen.

Aus der DE-A-199 21 120, die der WO-A-00/68877 entspricht, geht ein Verfahren und System zur Durchführung einer Satzspiegelkorrektur hervor. Dabei werden Druckdaten in einer logischen, mindestens einer Signatur entsprechenden Seitenfolge zum Drucken bereitgestellt. Mindestens ein Parameter des Aufzeichnungsträgers, z.B. des Papiers auf das die Daten gedruckt werden, wird bestimmt, der für die Position des Druckbildes auf dem signaturenweise gefalteten Aufzeichnungsträger relevant ist. Z.B. wird das Gewicht und/oder die Dicke des Papiers bestimmt. In Abhängigkeit von diesem Parameter wird vor dem Drucken eine Positionskorrektur der Seiten derart durchgeführt, daß die Druckbilder aufeinanderfolgender Seiten der fertigen Signatur passergenau liegen. Es wird somit die Verschiebung des Druckbildes aufgrund der Faltung des Papiers vor dem Drucken korrigiert.

Die WO-A-01/77806, veröffentlicht am 18.10.2001, beschreibt ein Verfahren zur Verarbeitung von Druckdaten, bei dem die Druckdaten vor dem Drukken auf einer Anzeigevorrichtung angezeigt werden (Preview). Hierbei wird zu den Druckdaten ein an der Anzeigevorrichtung verschiebbares Prüfmittel dargestellt. Das Prüfmittel ist bspw. ein Fadenkreuz. Mit Hilfe dieses Prüfmittels soll die Passergenauigkeit bzw. Registerhaltigkeit überprüft werden. Hierzu wird das Prüfmittel an einer durch den Rand der angezeigten Druckdaten vorgegebenen Position positioniert und fixiert. Dann werden die nächste bzw. die nachfolgenden Seiten zur Anzeige gebracht und deren Position relativ zum fixierten Prüfmittel festgestellt. Bei einer Diskrepanz können die Druckbilder entsprechend verschoben werden, so daß sie passergenau bzw. registerhaltig sind.

Aus der Veröffentlichung "Applicationbased printer generated print preview, IBM Technical Disclosure Bulletin, April 2001, Seite 708, Nr. 207 ist ein Verfahren bekannt, bei dem Druckdaten einem Druckgerät und einem darin befindlichen Rasterbildprozessor zum Rastern zugeführt werden. Die dabei erzeugten Rasterdaten (bitmap) werden über eine Zwischenstufe (print preview listener) an eine Betrachtungseinrichtung (Application print preview listener) gesandt und können dort von einem Benutzer betrachtet werden.

Aus der US-A-5,615,314 sind ein Verfahren und ein Drucksystem beschrieben, bei dem fehlerhafte Bildbereiche im Zuge des rasterungsprozesses korrigiert werden.

Aus der US-A-5,625,766 geht ein Verfahren zum überprüfen der Registerhaltigkeit zweier Seiten eines bedruckten Aufzeichnungsträgers zur Herstellung einer Druckplatte hervor. Hierbei wird eine auf die Druckplatte abzubildende Bilddatei mit einem Rasterverfahren zunächst gerastert, das sich von dem Rasterverfahren, mit welchem die Bilddatei zum Erzeugen der Druckplatte gerastert wird, lediglich durch eine geringere Auflösung unterscheidet. Diese mit geringerer Auflösung gerasterte Bilddatei wird zur Überprüfung des Druckbildes an einem Bildschirm dargestellt. Hierbei ist es auch möglich, dass die Bilddaten der Vorder- und Rückseite eines zu bedruckenden Aufzeichnungsträgers am Bildschirm einander überlagert werden, so dass die Registergenauigkeit der beiden Druckbilder überprüft werden kann.

Aus der WO-A-99/123337 geht ein Verfahren und Gerät zur elektronischen Archivierung eines Computer-Datenstromes hervor, bei welchem der Datenstrom auf Formular-Daten und variablen Daten sowie Index-Daten analysiert und separiert wird. Formular-Daten und variable Daten werden gerastert als Bit-Map-Dateien archiviert, wohingegen die Index-Daten in codierter Form, zum Beispiel ASCII, gespeichert werden. Die im Bit-Map vorliegenden Dateien können von einem Lesegerät abgerufen und auf einem Computerbildschirm dargestellt werden. Sie können auch unmittelbar einem Drucker zum Ausdrucken zugeführt werden. Zur Rasterung des Datenstromes kann ein Druck-Controller verwendet werden, der sowohl zum Erzeugen eines Datenstroms zur Ansteuerung eines Druckers als auch zum Erzeugen eines Archiv-Datenstroms eingesetzt wird.

Aus der WO-A-89/06396 ist ein Desktop Publishing System bekannt, bei dem auf einem in einem Personal-Computer erzeugte Bilddatei zu einem Bit-Map gerastert wird und in einem Bit-Map-Speicher gespeichert wird. Dieses Bit-Map wird direkt am Bildschirm angezeigt und am Drucker ausgegeben. Hierdurch soll sichergestellt werden, dass die Anzeige am Bildschirm mit der Ausgabe am Drucker übereinstimmen.

Die oben genannten Veröffentlichungen und Patentanmeldungen bzw. die jeweiligen korrespondierenden Anmeldungen werden hiermit durch Bezugnahme in die vorliegende Beschreibung aufgenommen.

Es ist Aufgabe der Erfindung, die genaue, visuelle Überprüfung von Dokumenten, die in einer Druckdatensprache als Druckdatenstrom vorliegen, zu ermöglichen.

Diese Aufgabe wird durch die in den unabhängigen Ansprüchen angegebene Erfindung gelöst. Vorteilhafte Ausführungsformen der Erfindung ergeben sich aus den abhängigen Ansprüchen.

Die Erfindung beruht auf der Erkenntnis, daß es zur hochgenauen, visuellen Überprüfbarkeit von Dokumenten bzw. Druckdatenströmen auf einem elektronischen Anzeigemedium insbesondere darauf ankommt, für die Voranzeige einen Anzeige-Rasterprozeß zu verwenden, der möglichst genau dem Druck-Rasterprozeß entspricht. Hierzu ist insbesondere vorgesehen, die Anzeige-Rasterung mit einer RasterSteuerung durchzuführen, deren Rasterregeln mit den Rasterregeln einer Rastersteuerung des Druckgerätes exakt übereinstimmt. Eine derartige Übereinstimmung ist mit verschiedenen Möglichkeiten erreichbar: gemäß einer ersten Möglichkeit wird genau dieselbe Rastersteuerung verwendet. Eine derartige Rastersteuerung kann beispielsweise als elektronische Hardware-Schaltung ausgebildet sein. Der Anzeige-Rasterprozeß kann dann beispielsweise auf exakt der gleichen elektronischen Steuerung ablaufen, wodurch die Identität der beiden Rasterprozesse gewährleistet ist. Bei Anwendungsfällen, in denen die elektronische Rastersteuerung des Druck-Rasterprozesses nicht verfügbar ist, kann jedoch auch vorgesehen sein, den Anzeige-Rasterprozeß mittels eines Computerprogramms (Software) durchzuführen, der zumindest im wesentlichen, insbesondere genau den Rechenregeln der Hardware-Steuerung folgt und der somit zu einem Rasterergebnis führt, das ziemlich genau, insbesondere pixelgenau oder ganz genau dem mit der Hardware-Steuerung erzeilten Rasterergebnis entspricht.

Für eine pixelgenaue Übereinstimmung der beiden Rasterprozesse ist es insbesondere vorteilhaft, für den Anzeige-Rasterprozeß alle Einstellungen des Druckgeräts, die in unmittelbarer und/oder mittelbarer Wirkung den Rasterprozeß am Druckgerät beeinflussen, zu übernehmen. Weiterhin kann vorgesehen sein, druckgerätspezifische Einstellungen zu verwenden, um weitere, aufzeichnungsrelevante Korrekturen für eine möglichst originalgetreue, auf dem letztendlichen Aufzeichnungsträger bewirkte Darstellung des Bildes vorzusehen. Beispielsweise kann für eine zweiseitige Aufzeichnung von Bildern auf Papier vorgesehen sein, die bei einem Wärme-Druck-Fixiervorgang im Rahmen eines elektrografischen Aufzeichnungsprozesses auftretende Schrumpfung des Papiers dergestalt zu berücksichtigen, daß nach dem Anzeige-Rasterprozeß, der genau dem Druck-Rasterprozeß eine weitere Korrektur an den gerasterten Anzeige-Daten erfolgt, bevor diese zur Anzeige gebracht werden.

Gemäß einem weiteren Aspekt der Erfindung, der auch unabhängig vom oben genannten, ersten Aspekt der Erfindung gesehen werden kann, werden Druckdaten in einem von vielen möglichen verschiedenen Druckdatensprachen an ein Druckdaten-Produktionssystem übertragen. Dort werden sie einem Anzeigen-Rasterprozeß unterzogen, dann zur Anzeige und Überprüfung gebracht und anschließend zum Durchlaufen eines Druck-Rasterprozesses an ein Druckgerät übertragen. Gemäß diesem Aspekt der Erfindung werden die Druckdaten auftragsweise bearbeitet, wobei jeder Auftrag eine Vielzahl von Seiten und/oder Sendungen, die aus verschiedenen Seiten zusammengesetzt sind, verarbeitet. In einem derartigen Druckdaten-Produktionssystem sind eine Vielzahl von Bearbeitungsstufen und Bearbeitungsmöglichkeiten für die Dokumentendaten vorgesehen. Dazu können insbesondere Indizierungsdaten in den Druckdatenstrom eingefügt werden, die Druckdaten in der Druckdatensprache und/oder gerastert und ggf. mit den Indizierungsdaten gespeichert sowie die Bearbeitung eines Druckdatenauftrags mit einem Auftragsbearbeitungssystem gesteuert werden.

In einem weiteren Aspekt der Erfindung, der ebenfalls unabhängig von den zuvor genannten Aspekten der Erfindung gesehen werden kann, werden Druckdaten, die für einen Duplex-Druck auf die Vorder- und die Rückseite eines Aufzeichnungsträgers übertragen werden, zur Similierung und/oder Überprüfung des Druckergebnisses, insbesondere zur Überprüfung der Registerhaltigkeit des Aufdrucks auf der Vorder- und Rückseite des Aufzeichnungsträgers jeweils die zusammengehörenden Daten zweier Seiten gemeinsam auf einem Aufzeigemedium angezeigt. Die Anzeige entspricht dabei genau der Anzeige auf dem Aufzeichnungsträger, wodurch die Daten der Rückseite des Aufzeichnungsträgers quasi spiegelverkehrt auf dem Anzeigemedium angezeigt werden. Zur Unterscheidung der Daten der Rückseite und der Daten der Vorderseite bei ihrer gemeinsamen Darstellung, werden die jeweiligen Informationen während ihrer Anzeige unterschiedlich gekennzeichnet, insbesondere mit unterschiedlicher Farbe.

Gemäß einem weiteren Aspekt der Erfindung, der wiederum unabhängig von den zuvor genannten Aspekten der Erfindung gesehen werden kann, werden die Druckdaten in einem Druck-Produktionssystem auftrags- und seitenweise bearbeitet und an ein Druckgerät gesandt. Mittels eines Kontroll-Systems werden dabei jeweils die aktuell am Druckgerät anstehenden Seiteninformationen angezeigt. Mit diesem Aspekt der Erfindung läßt sich der Druckproduktionsprozeß zeitgenau, quasi in Echtzeit, an der Anzeigevorrichtung verfolgen. Zur auftragsweisen Verarbeitung von Druckdatenströmen ist es insbesondere vorteilhaft, eine Möglichkeit zur Umschaltung zwischen dem oben genannten ersten Betriebsmodus, nämlich der Echtzeitanzeige gedruckter Seiten, und einem auftragsweise selektiven zweiten Betriebsmodus vorzusehen, durch den jeweils nur vorgegebene Seiten, standardmäßig die erste Seite und auf Anforderung bestimmte Seiten eines Druckauftrags angezeigt werden. In einem Druckproduktionssystem, bei dem mehrere Druckgeräte parallel von einem gemeinsamen Druckauftrags-Steuerungsprogramm verarbeitet werden, kann dabei auch vorgesehen sein, innerhalb der Anzeigeeinrichtung zwischen verschiedenen Aufträgen, die ggf. auf verschiedenen Druckgeräten gedruckt werden, umzuschalten und somit die aktuellen Produktionsschritte auf den einzelnen Druckgeräten seitengenau mit der vollen Seiteninformation zu verfolgen.

Dabei ist es insbesondere auch vorteilhaft, die zu einem Druckauftrag (Job) gehörenden, gerasterten Daten zwischenzuspeichern und die zwischengespeicherten Daten nur auf besondere Anforderung und/oder nur nach einer vorgegebenen Zeitgrenze, z.B. jeweils zum Wochenende, zu löschen.

Die vorliegende Erfindung ist insbesondere zum Überprüfen von Druckprozessen geeignet. Hierdurch können sog. Makulatur-Seiten vermieden werden, die entstehen, wenn Druckaufträge probeweise gedruckt werden oder wenn angestoßene Druckaufträge aus Einstellungsgründen fehlerhaft gedruckt werden. Im Druckproduktionsumfeld kann dadurch Druckvorbereitungszeit und/oder tatsächliche Druckzeit eingespart werden. Die Einsparung wirkt sich insbesondere in Bereichen des digitalen Hochleistungsdrucks besonders gravierend aus, in denen seiten- und/oder dokumentweise individuelle Druckdaten zwei- oder mehrfarbig ausgedruckt werden. Die Erfindung ermöglicht dabei nicht nur das Überlagern von Rasterdaten von Vorder- und Rückseiten auf einem preview-Anzeigegerät, sondern alternativ oder zusätzlich die Überlagerung gerasterter Farbauszüge. Durch eine entsprechende Vergrößerung mehrfarbiger Druckdaten auf dem Anzeigegerät derart, dass die Grundauflösung des Rasters erkennbar ist, können die Farbauszüge hinsichtlich ihrer Rastergenauigkeit bzw. Überlagerungsgüte geprüft werden und bei inakzeptablen Abweichungen neue Rasterprozesse mit veränderten (korrigierten) Parameteren angestoßen werden, bevor ein Umdruck erfolgt. Dies vermeidet Makulatur.

Weiterhin erlaubt die Erfindung, Druckdaten bereits vor dem Drucken online zu begutachten und dadurch z.B. die korrekte Zuordnung vorgegebener Formulardaten mit individuellen Druckdaten (z.B. individueller Rechnungsdaten wie Adressat, Rechnungsnummer, Kundennummer etc.) zu prüfen. Die Anpassung des Rasterprozesses für die Anzeige-Daten an den Rasterprozess für die Druckdaten erlaubt dabei nicht nur eine hochgenaue Übereinstimmung der Überprüfungs-Anzeige mit den tatsächlich gedruckten Dokumenten, es wird dabei insbesondere ermöglicht, wenn die Steuerungsprogramme für den Anzeige-Rasterprozess automatisch die Einstellungen des für den späteren Druckprozess ausgewählten Druckgerätes und/oder dessen Rasterprozessors erfolgt.

Die Erfindung ist insbesondere bei der Migration verschiedener Dokumentenbearbeitungssysteme vorteilhaft einsetzbar. Sie ermöglicht, Daten verschiedenster Eingangsformate, die in einem Druckproduktionssystem verarbeitbar sind, mit einem daran angeschlossenen Anzeigeprogramm bildpunktgenau zu kontrollieren. Da bei der Migration von Erzeugungs- und Druckproduktionssteureungsprogrammen auf neue Systemumgebungen die Bilddaten oftmals konvertiert werden müssen, können durch die Migration Fehler im Druckbild erzeugt werden. Da mit der Erfindung die aufgerasterten Bilddaten kontrolliert werden, werden derartige Konvertierungsfehler mit erfasst. Zudem kann die Anzeigeeinrichtung für den Preview der aufgerasterten Bilddaten, die eine PIXEL-Datei in einem üblichen Format ist, einfach in beliebigen Systemumgebungen realisiert werden.

Mit der Erfindung können Druckdaten unterschiedlicher Dokumentenerzeugungsprogramme, wie z.B. eines Textverärbeitungsprogramms, eines Programms zur Aufbereitung von Präsentationen, oder Anwendungen unterschiedlicher Betriebssysteme, wie z.B. Windows- und Apple-Anwendungen und Anwendungen einer Großrechenanlage, wie z.B. Océ PRISMA FGL (Forms Generation Layer) z.B. auf Basis eines BS2000-Betriebssystem, mittels einer einzigen Anzeigeeinrichtung kontrolliert und daraus Korrekturen abgeleitet werden.

Hierbei kann es zweckmäßig sein, eine einheitliche Korrekturplattform vorzusehen, mit der die am Bildschirm des Benutzers vorgenommenen Korrekturen automatisch vom Dokumentenerzeugungsprogramm übernommen werden. Hierzu werden von der Korrekturplattform an das jeweilige Dokumentenerzeugungsprogramm angepasste Steuerbefehle erzeugt.

Weitere Aspekte und Vorteile der Erfindung werden anhand einiger Ausführungsbeispiele und Figuren nachfolgend beschrieben.

Es zeigen:
Figur 1: ein Druckproduktions- und Archivsystem,
Figur 2: einen vereinfachten Prozessablauf in einem Druckproduktions- und Archivsystem,
Figur 3: Arbeitsabläufe in einem Dokumentenbearbeitungssystem,.
Figur 4: Steuerungskomponenten in einem Druckproduktionssystem,
Figur 5: Programmkomponenten zur Steuerung der Rasterung von Anzeige-Daten,
Figur 6: Steuerungskomponenten für die Rasterung von Anzeige-Daten aus einem Archivsystem heraus,
Figur 7: einen Detail-Ablauf des in Figur 6 gezeigten Prozesses,
Figur 8: ein Haupt-Menü in einem Anzeigeprogramm,
Figur 9: ein auftragsbezogenes Untermenü in einem Anzeigeprogramm,
Figur 10: ein seitenbezogenes Untermenü in einem Anzeigeprogramm,
Figur 11: anzeigespezifische Einstellmöglichkeiten,
Figur 12: ein Anzeigefenster zur Überprüfung der Registerhaltigkeit aufeinanderfolgender Druckseiten,
Figuren 13-16: druckgerätespezifische Einstellmenüs,
Figur 17: ein archivspezifisches Einstellmenü,
Figur 18: einen schematischen Aufbau eines erfindungsgemäßen Systems zum Steuern eines Druckdatenstroms in einem Blockschaltbild,
Figur 19: einen schematischen Aufbau eines weiteren erfindungsgemäßen Systems zum Steuern eines Druckdatenstroms in einem Blockschaltbild, und
Figur 20: einen schematischen Aufbau eines weiteren erfindungsgemäßen Systems zum Steuern eines Druckdatenstroms in einem Blockschaltbild.

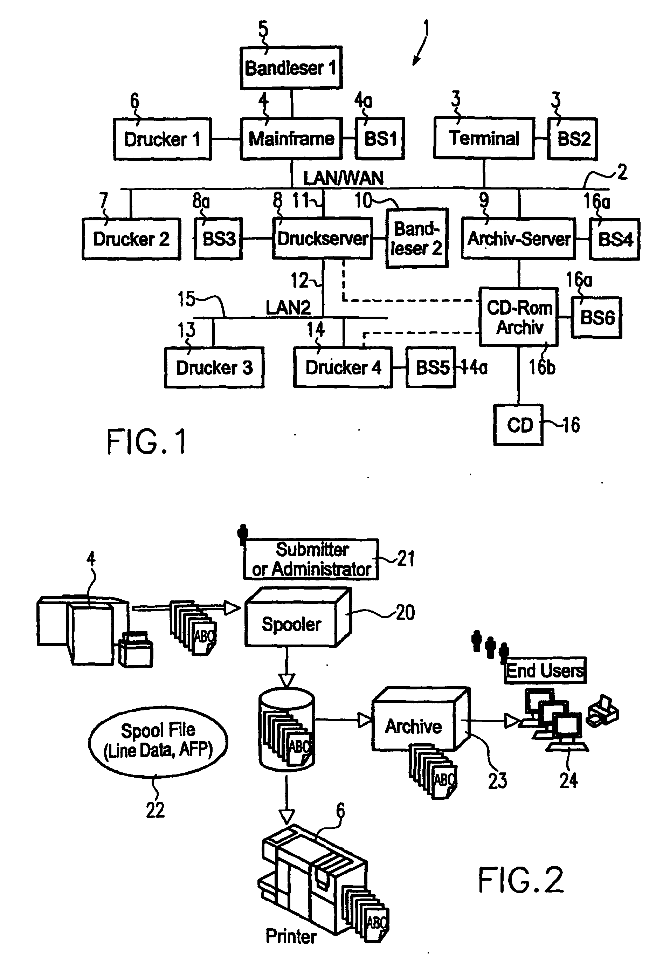

In Figur 1 ist ein Hochleistungsdrucksystem 1 gezeigt, bei welchem verschiedene System-Komponenten über ein Datennetzwerk 2, welches ein lokales Netz (Local Area Network, LAN) oder auch ein größeres Netzwerk (Wide Area Network, WAN) sein kann. An dem Netzwerk 2 hängt mindestens ein Client-Terminal 3, an dem Druckaufträge erzeugt werden können. Das Terminal 3 ist ein an sich bekannter Computer (z.B. Personal Computer PC) mit angeschlossenem Bildschirm 3a.

Die Druckaufträge können wahlweise auch auf einem Hauptcomputer (Main Frame) 4 erzeugt werden und/oder Daten von dem Main Frame 4 in den Druckauftrag eingefügt werden. Der Main Frame 4 des Rechenzentrums wird über eine geeignete Betriebssystem-Steuerung wie MVS, BS2000 oder VSE gesteuert. Am Main Frame 4 können Steuerungsfunktionen und Anzeigen über den daran angeschlossenen Bildschirm 4a erfolgen. An den Hauptcomputer 4 (Main Frame) ist außerdem ein Bandlesegerät 5 sowie ein erster Hochleistungsdrucker 6 direkt angeschlossen.

Am Datennetzwerk 2 sind außerdem ein zweiter Drucker 7, ein Druckserver 8 sowie ein Archivserver 9 angeschlossen. Der Druckserver 8 wiederum ist mit einem zweiten Bandlesegerät 10 sowie einem Bildschirm 8a verbunden. Zusätzlich zur Verbindung 11 zwischen dem Druckserver 8 und dem Haupt-Datennetz-werk-2 ist der Druckserver 8 über die Verbindung 12 mit einem zweiten, lokalen Netzwerk 15 verbunden, an dem weitere Drucker 13, 14 angeschlossen sind. Der Druckserver 8 sowie der Drucker 14 können optional mit einer Anlage 16b zur Produktion von Archivspeichern 16, z.B. mit einer Schreibeinrichtung für optische Speicherplatten (CD-ROM, DVD), Magnetspeicherplatten (magnetic disks), Bandspeicher, Kassettenspeicher, "write once read many" (WORM)-Einrichtungen, oder für andere, nicht löschbare Speicher, verbunden werden. Die Archivanlage 16 arbeitet aber hauptsächlich mit dem Archivserver 9 zusammen. Über zusätzliche Bildschirme 9a, 16a und 14 a können die jeweils mit ihnen verbundenen Geräte 9, 16 und 14 bedient und optional auch Verbindungen zu anderen, an das Netzwerk 2 angeschlossene Komponenten hergestellt werden.

Figur 2 zeigt Grundkomponenten für die Archivierung. Der von dem Host Computer 4 abgegebene Datenstrom wird in einem Spooler 20 gesammelt, wobei Parameter des Spoolers 20 von einem Bediener über eine Administrator-Einheit 21 eingegeben bzw. bereitgestellt werden. Der Spooler 20 ist als Software-Programm im Druckserver 8 oder im Host-Computer 4 installiert. Er nutzt verschiedene Einrichtungen (Interfaces, Speicher, Bussystem) des Servers 8 und/oder des Host-Computers 4. Der Spooler 20 gibt dann eine Spool-Datei 22 aus und führt sie dem Drucker 6 und/oder einer Archivierungskomponente 23 zu. Von dort können die einzelnen Dokumente auf Arbeitsplätzen 24 zur Anzeige gebracht oder wiederum ausgedruckt werden.

Die Spool-Datei kann in verschiedenen Datenformaten, beispielsweise im Zeilendatenformat (Line Data) oder im AFP-Format übertragen werden. Im Zuge der Archivierung werden die Dokumente mit allen benötigten Informationen abgespeichert, so dass es in originaler Druckqualität jederzeit wieder abgerufen und dupliziert werden kann, selbst wenn sich die Computersystem-Umgebung oder die Druckumgebung zu einem späteren Zeitpunkt geändert hat. Die Arbeitsplätze 24 können auf die Archivkomponente 23 insbesondere über ein Netzwerk zugreifen, beispielsweise auch über das Internet, wobei der Zugriff dabei durch an sich bekannte Browser-Technologien wie dem Browser Microsoft Internet Explorer^{®} oder dem Netscape communicator^{®} eingesetzt werden können.

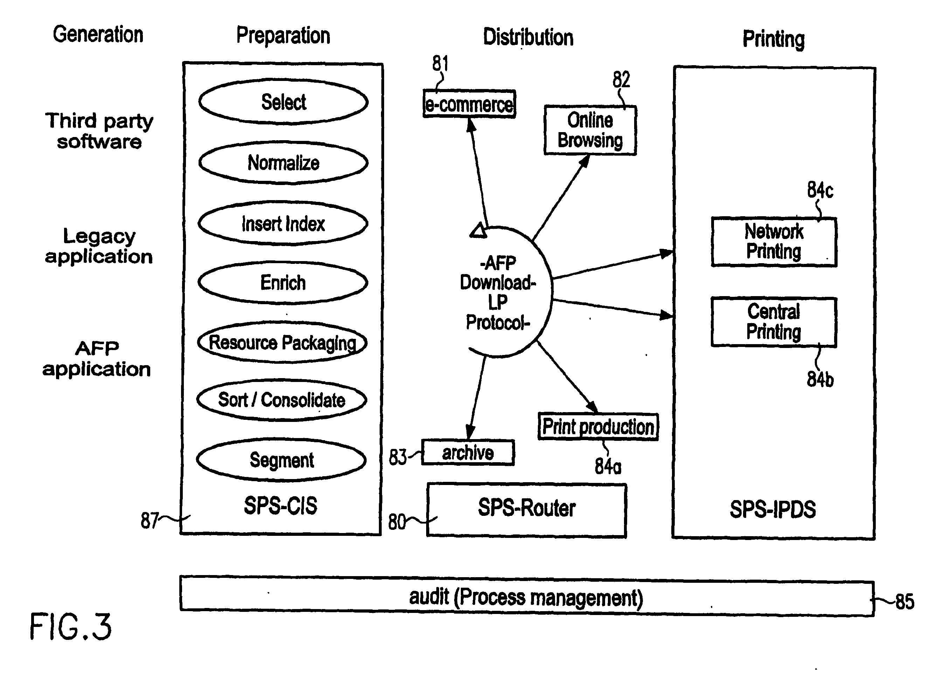

In Figur 3 sind vier Grundstufen zur Verarbeitung von Dokumentendaten in einem Dokumentenproduktionssystem mit angeschlossenem Drucksystem dargestellt. In einer ersten Phase (Generation) werden Dokumentendaten erzeugt bzw. in das Dokumentendatensystem eingelesen. Dies kann auf dreierlei Weise passieren, nämlich einerseits durch Erzeugung eines Dokuments mit einer Anwendungssoftware (third party software), beispielsweise durch ein Textverarbeitungssystem, ein grafisches Bilderzeugungssystem, einen Büroscanner, der Papiervorlagen abtastet oder dergleichen. In einer zweiten Anwendung (legacy application) können bestehende Dokumentendaten in Form eines AFP-Datenstroms (AFPapplication) oder eines nicht weiter spezifizierten Format (legacy application) vorliegen. In einer zweiten Verarbeitungsstufe "preparation" werden die jeweiligen Daten für die nachfolgenden Ausgabeschritte (distribution printing) aufbearbeitet. Hierzu dient ein Steuerungssystem (SPS), mit dem die drei Verarbeitungsstufen aufeinander abgestimmt in Form eines Produktionsprozesses steuert. Es umfasst die drei Komponenten für die drei Verarbeitungsschritte. In der ersten Komponente 45 (SPS-CIS) werden die eingehenden Datenströme auf ein einheitliches Format (AFP) normiert, die Daten indiziert, mit Steuerungsdaten angereichert, Resourcendaten erzeugt, eine Umsortierung/Konsolidierung des Datenstroms bewerkstelligt und schließlich die Datenströme ausgabespezifisch segmentiert, sodass die nachfolgenden Ausgabeschritte (distribution, printing) mit hoher Geschwindigkeit durchgeführt werden können.

Zur Verteilung der Druckdaten an verschiedene Ausgabekanäle dient ein Verteilungsmodul "SPS-Rooter" 80. Mit dem Verteilungsmodul 80 lassen sich die Daten wahlweise Systemen zum elektronischen Versand, beispielsweise per E-Mail, in einem e-commerce-modul 81 zuführen, einem Anzeigemodul "Online-browsing" 82, einem Archivierungssystem 83 oder Druckproduktionssystemen 84a, 84b, 84c. Dabei können insbesondere spezielle Drucksysteme zur Ausgabe der Druckdaten in einem Netzwerk (insbesondere ein über das Internet verbundene Netzwerk von Druckgeräten) 84c oder über ein lokales, an einem bestimmten Standort befindliches zentrales Drucksystem 84b. Die Prozessstufen der Bearbeitung, der Verteilung und ggf. des Ausdruckens werden von Überwachungsmodulen 85 überwacht.

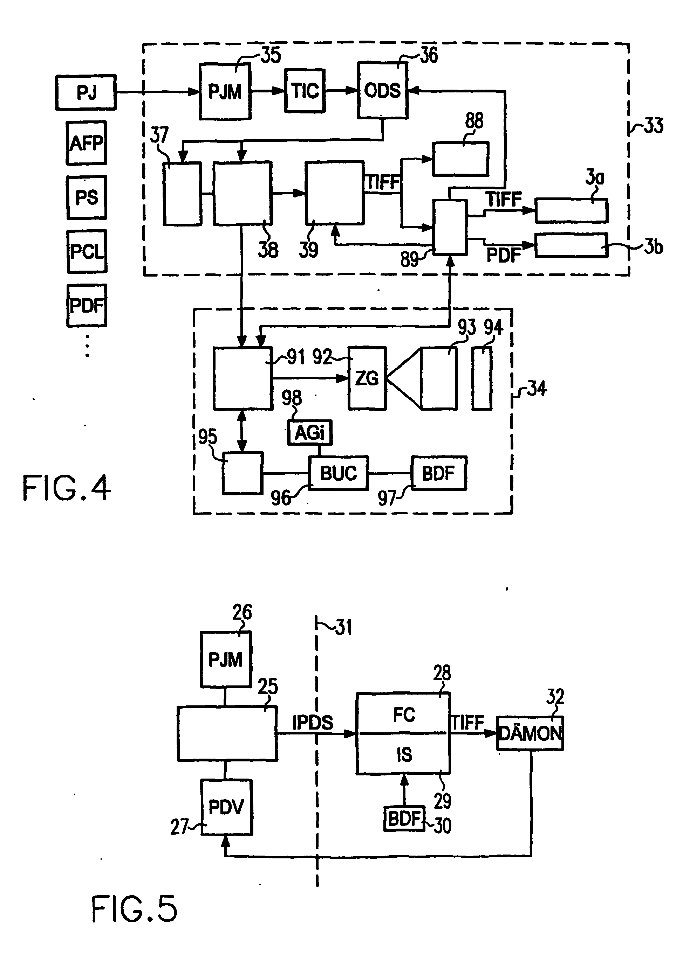

Fig. 4 zeigt schematisch vereinfacht die Struktur der Steuerungskomponenten in einem Druckproduktionssystem. Das Druckproduktionssystem umfaßt ein Steuersystem 33 und einen Drucker 34. Das Steuersystem weist einen Druck-Job-Manager 35 auf, der eingehende Druckaufträge (Printjobs) unterschiedlicher Formate (AFP, PS, PCL, PDF) verarbeitet und mit einem Job-Ticket (.TIC) versieht, in dem die für die Abarbeitung des Druckauftrages notwendigen Begleitdaten abgespeichert sind. Der Print-Job-Manager 35 leitet die Druckaufträge ein Steuerungsmodul 36 (ODS: Order Distribution System), das die Druckaufträge an ein Druckproduktionsprogramm 37 oder einen Druckdatenstromkonverter 38 weiterleitet.

Die von dem Druckdatenstromkonverter 38 in den IPDS-Druckdatenstrom konvertierten Druckdaten werden einer Rastereinrichtung 39 zugeführt, in der sie aufgerastert und in eine PIXEL-Datei, die bspw. im TIFF-Format ist, umgesetzt werden. Die PIXEL-Datei kann in einem Archiv 88 abgespeichert werden oder über ein Anzeigemodul 89 mittels eines Anzeigeprogramms 90a, 90b angezeigt werden. Das Anzeigenmodul ist ein Softwaremodul, das die PIXEL-Datei entweder unverändert im TIFF-Format an das Anzeigeprogramm 90a oder in ein anderes Format umgesetzt (z.B. PDF) und ggfs. bzgl. weiterer Parameter, wie z.B. des Versatzes in Abhängigkeit von der Faltung, der Papierschrumpfung korrigiert an das Anzeigeprogramm 90b weiterleitet.

Dieses Anzeigemodul 89 weist Verbindungen zum Steuerungsmodul 36 und zur Rastereinrichtung 39 auf, die schematisch darstellen, dass ein Benutzer durch das Betrachten der mittels der Anzeigeprogramme 90a und 90b dargestellten PIXEL-Dateien korrigierend auf die Druckdaten eingreifen kann.

Im Drucker 34 sind eine Rastereinrichtung 91, die entweder direkt vom Druckdatenstromkonverter 38 einen Druckdatenstrom oder von dem Anzeigemodul einen Druckdatenstrom erhalten kann. Die Rastereinrichtung 91 rastert den Druckdatenstrom und leitet ihn an einen Zeichengenerator 92 weiter, der z.B. aus einem LED-Kamm besteht und eine Fotoleitertrommel 93 entsprechend den aufgerasterten Druckdaten belichtet. Mit Hilfe der belichteten Fotoleitertrommel 93 wird ein Papierbogen 94 bedruckt.

Die Rasterungseinrichtung kann auf einen Datenspeicher 95 zugreifen, in dem die Druckparameter des Druckers 34 gespeichert sind. Diese Druckparameter können einem BUC-Controller 96 (Basic Unit Controller) verändert werden, der mit einem Bedienfeld 97 und Aggregaten 98, wie z.B. die Papiervorschubeinrichtungen, verbunden ist.

Die Rasteinrichtung 39 des Steuersystems 33 ist eine funktionell identische Nachbildung der Rasteinrichtung 91 des Druckers 34. Hierdurch ist sichergestellt, daß die mit den Anzeigeprogrammen 90a, 90b erzeugte Darstellung identisch zu einem potentiellen Ausdruck auf Papier ist.

Fig. 5 zeigt schematisch Programmkomponenten eines Ausführungsbeispiels der Erfindung mit einem Druckproduktionsprogramm 25 zum Erzeugen eines IPDS-Stromes, einem Druck-Job-Manager 26 , einem Anzeigeprogramm 27, einem FC-Modul 28 (Functional Code) und einem IS-Modul 29 (ImageStream). Das FC-Modul 28 und das IS-Modul 29 sind in einer steuereinrichtung eines Druckers abgespeichert, wobei über ein Bedienfeld 30 am Drucker Einstellungen in den Modulen 28, 29 verändert werden können. Die Programmkomponenten 25, 26, 27 sind an einem Computer abgespeichert, der mit dem Drucker über eine Datenleitung verbunden ist. In Fig. 5 ist der Bereich zwischen dem Drucker und dem Computer durch eine gestrichelte Linie 31 getrennt.

Das FC-Modul 28 enthält die Regeln zur Rasterung eines Druckdatenstromes. Die gerasterten Druckdaten stellen das Muster dar, mit welchen die Belichtungselemente des Drukkers, die in der Regel Leuchtdioden sind, angesteuert werden. Das IS-Modul enthält eine Funktion, mit welcher die gerasterten Druckdaten in eine PIXEL-Datei, z.B. im TIFF-Format, umgesetzt werden können. Diese PIXEL-Dateien werden zur Archivierung der gedruckten Dokumente verwendet. Dies ist in EP 0 749 659 B1 (entspricht der US 5,940,584) beschrieben. Die EP 0 749 659 B1 und die US 5,940,584 werden unter Bezugnahme in die vorliegende Beschreibung aufgenommen.

Zusätzlich ist ein als Dämon 32 bezeichneter Programmabschnitt vorgesehen, das ein an das FC-Modul gekoppelt ist, mit welchem eine PIXEL-Datei zum Anzeigeprogramm 27 gesandt wird.

Nachfolgend wird die Funktionsweise dieser Programmkomponenten näher erläutert. Mit dem Druckproduktionsprogramm 25 wird ein Druckdatenstrom im IPDS-Format erzeugt und an den Drucker gesandt. Dieser Druckdatenstrom wird von dem FC-Modul in ein zur Ansteuerung der Druckereinheit geeignetes Format aufgerastert und in einer Steuerungsdatei abgespeichert. Die Steuerungsdatei wird vom IS-Modul 29 in eine PIXEL-Datei umgesetzt. Diese PIXEL-Datei wird von dem Dämon an das Anzeigeprogramm gesandt und von diesem an einer Anzeigeeinrichtung zur Anzeige gebracht. Ein Benutzer kann nun auf Grundlage der dargestellten gerasterten Druckdaten am Druckproduktionsprogramm 25 Korrekturen an den Druckdaten vornehmen.

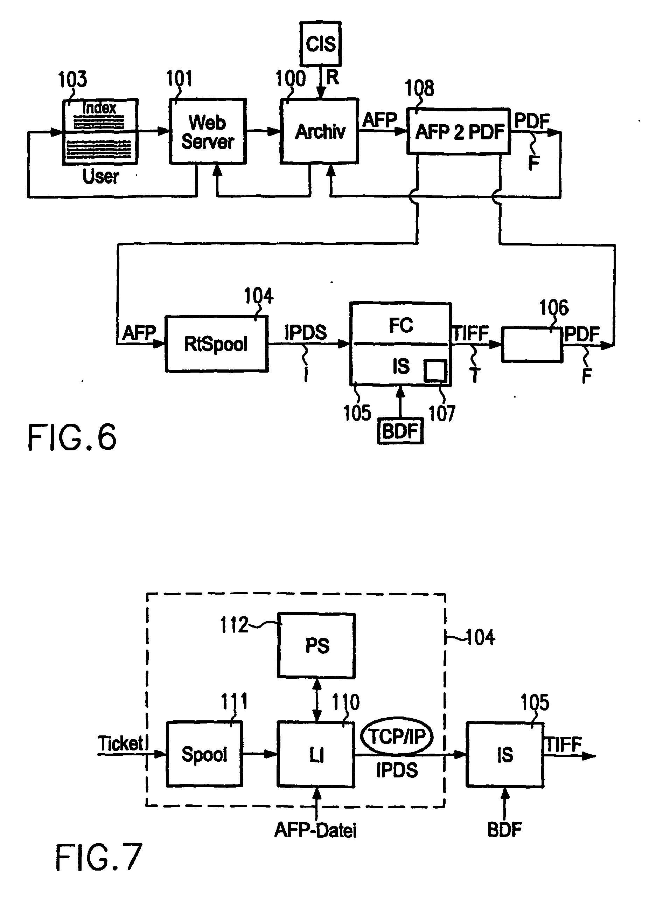

In den Figuren 6 und 7 ist dargestellt, wie Druckdaten, die in einem zentralen Archivspeicher 100 eines Druckproduktionssystems im Druckdatenformat AFP (Advanced Function Presentation) gespeichert sind, in einen PDF (Portable Document Format) Druckdatenstrom umgewandelt werden und im Archiv ebenfalls zwischengespeichert werden. Variable AFP-Druckdaten V werden dabei insbesondere über den Web-Server 101 im Zuge der Bearbeitung eines Druckauftrages (Druckjobs) während eines Druckproduktionsprozesses in den Archivspeicher 100 eingespielt. AFP Inline Ressourcen-Daten werden dabei von dem Konvertierungs-, Indizierung- und Sortierungssystem CIS 102 so in den Archivspeicher 100 eingespielt, dass die variablen Daten und die Ressourcen-Daten zum vollständigen AFP-Datenstrom P zusammengefügt werden können. Sie können aber auch von einem externen Archivspeicher (z. B. von einem Bandspeicher oder einem CD-ROM-Archiv) als Datenstrom A eingespielt werden.

Weitere Einzelheiten zur Erzeugung eines derartigen AFP-Datenstroms sind der deutschen Patentanmeldung Nr. 100 17 785.9 zu entnehmen, deren Inhalt hiermit durch Bezugnahme in die vorliegende Beschreibung aufgenommen wird.

Die variablen Daten V werden im Zuge eines Druckproduktionsprozesses über den Web-Server 101 in den Archivspeicher 100 eingespielt. Der Web-Server 101 wird dabei mittels einer Netzwerkverbindung (LAN, WAN) über ein Benutzerinterface 103 (Hardware und/oder Software) bedient.

Der AFP-Druckdatenstrom P wird im Konvertierungsmodul 108 in einen PDF-Druckdatenstrom konvertiert und dem Archivspeicher 100 ebenfalls zugeführt.

Die vollständigen AFP-Druckdaten P werden im Konvertierungsmodul 108 zunächst durch das Spooling-Modul 104 (RtSpool) in einen Intelligent Printer Data Stream (IPDS ) Druckdatenstrom I umgewandelt. Dieser Datenstrom I wird dann im Konvertierungsmodul 105, das dem in Figur 5 gezeigten Modulen 28, 29 (FC/IS) entspricht, in einen TIFF-Datenstrom T umgewandelt. Das Konvertierungsmodul 105 kann also wiederum als SRA-Controller mit entsprechenden Hardware-Modulen und/oder Software-Modulen (Functional Code, FC) ausgebildet sein. Die Rechenregeln zum Erzeugen des gerasterten Bildes entsprechen dabei genau den Rechenregeln in einem Druckgerät. Druckereinstellungen, die insbesondere über ein Bedienfeld (BDF) am Druckgerät vorgenommen wurden, fließen auch hier wieder in die Rasterregeln für das elektronisch erzeugte Bild ein.

Zusätzlich zur Umwandlung der IPDS-Daten in TIFF-Daten können von einem im IS-Modul integrierten oder diesem vorgeschalteten Aufzeichnungsprozess-Korrekturmodul 107 weitere Korrekturen für die TIFF-Bild-Datei ausgeführt werden, durch die weitere Einflüsse, die während des Aufzeichnungsprozesses der Bilddaten auf einen Aufzeichnungsträger wirken können, berücksichtigt werden. Dabei können z.B. eine Papierschrumpfung beim Drucken von Toner im Rahmen eines elektrofotografischen Prozesses mit Wärme-Druck-Fixierung auf Papier korrigiert werden. Dadurch entspricht das elektronisch zur Überprüfung dargestellte Bild noch genauer dem auf dem Papier letztendlich erzeugten Bild.

Der TIFF-Datenstrom T wird anschließend in einem PDF-Konverter 106 in einen PDF-Datenstrom F umgewandelt.

In Figur 7 sind die beiden Konverter 104 und 105 nochmals etwas detaillierter dargestellt. Die AFP-Daten F werden im Konvertierungsmodul 104 einem plattformabhängigen Interface 110 (LI: Logical Interface) zugeführt, das auch mit einer anderen Datenquelle 111 (Spool) zusammenwirkt. Über das Spool-Modul 111 werden insbesondere Druckauftrags-Begleitdaten (Ticket-Daten) bereit gestellt. Auf das Interface 110 ist ein plattformunabhängiges Print-Server-System 112 aufgesetzt, das die eigentliche Umsetzung von unterschiedlichen Druckdatenformaten, wie z.B. AFP, PS, PCL, PDF, auf ein einheitliches Format (IPDS) ausführt.

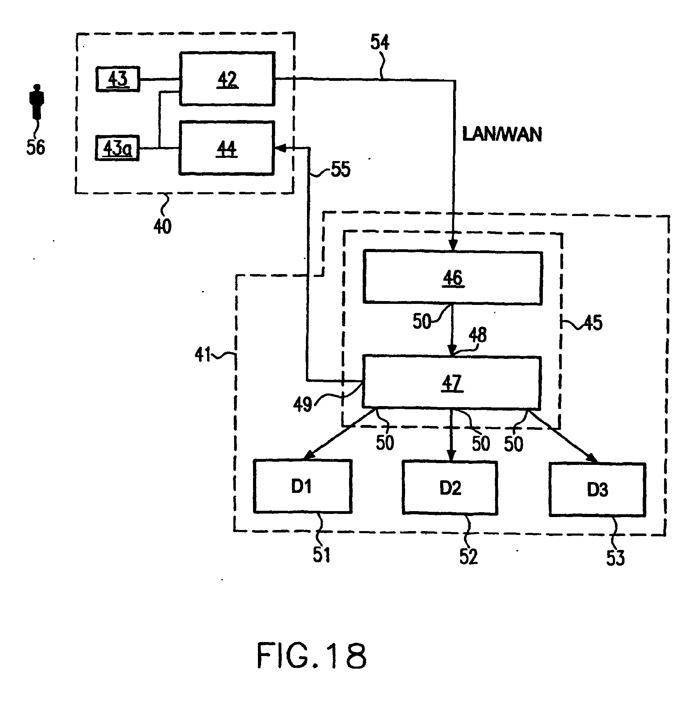

Fig. 18 zeigt ein Ausführungsbeispiel eines Gerätesystems zum visuellen Überprüfen eines Druckdatenstroms.

Dieses Gerätesystem umfaßt ein Dokument-Erzeugungs- und Überprüfungssystem 40 und ein Druckproduktionssystem 41.

Das Dokument-Erzeugungs- und Überprüfungssystem 40 weist eine Dokument-Erzeugungseinrichtung 42, eine Eingabeeinrichtung 43 und eine Anzeigeeinrichtung 44 zum Visualisieren eines Druckdatenstroms auf. Diese Dokument-Erzeugungs- und Überprüfungssystem 40 wird bspw. durch einen Personal-Commputer dargestellt, wobei die Dokument-Erzeugungseinrichtung 42 ein Computerprogramm, mit welchem zu druckende Druckdaten erzeugt werden können, wie z.B. ein Textverarbeitungsprogramm, ist, die Eingabeeinrichtung 43 die Tatstatur des Personal-Computers ist, und die Anzeigeeinrichtung 44 ein Computerprogramm zum Anzeigen von Bildinformationen eines vorbestimmten Formates, wie z.B. TIFF oder PDF, ist. Grundsätzlich kann hierfür ein handelsübliches Programm, wie z.B. der Acrobat Reader^{®} von Adobe verwendet werden.

Die Dokument-Erzeugungseinrichtung 42 und die Anzeigeeinrichtung 44 können die Druckdaten an einem Bildschirm 43a darstellen.

Die Dokument-Erzeugungseinrichtung 42 und die Anzeigeeinrichtung 44 kann auch durch ein einziges Computerprogramm ausgebildet sein, das sowohl zum Erzeugen zu druckender Daten als auch zum Darstellen von gerasterten Bildinformationen geeignet ist. Es wird jedoch die Verwendung eines separaten, speziell für das erfindungsgemäße Verfahren ausgebildeten Programms zum Anzeigen der gerasterten Bildinformationen bevorzugt.

Das Druckproduktionssystem 41 weist einen Druckserver 45 auf. Zur Vereinfachung der bildlichen Darstellung sind vom Druckserver 45 lediglich ein Druckdatenstromkonverter 46 und eine Rasterungseinrichtung 47 zum Rastern von Bilddaten dargestellt.

Der Druckdatenstromkonverter 46 konvertiert die in unterschiedlichen Formaten (PCL, PS, WMF) eingehenden Druckdatenströme in einen einheitlichen Druckdatenstrom (IPDS: Intelligent Print Data Stream), der der Rasterungseinrichtung 47 zugeführt wird.

Von der Rasterungseinrichtung 47 wird dieser Druckdatenstrom gerastert. Bei der Rasterung der Bilddaten werden diese in ein Halbtonmuster umgesetzt bzw. gedithert. Hierzu sind unterschiedliche Verfahren bekannt. Diese sind auch von dem Drucker, mit welchem sie gedruckt werden sollen und insbesondere von dessen Auflösung und Druckart (einfarbig, mehrfarbig, single-level-Dithern, multi-level-Dithern) abhängig. Eine geeignete Rasterungseinrichtung ist z.B. der im "Das Druckerbuch", Océ Printing Systems GmbH, Ausgabe 4a, Mai 1999, ISBN 3-00-001019-X in Kapitel 10 beschriebene SRA-Controller. Wesentliche Komponenten dieses SRA-Controller sind auch im US-Patent US 5,012,434 und in der internationalen Patentanmeldung WO 00/22537 A1 beschrieben . Diese Dokumente werden unter Bezugnahme in die vorliegende Beschreibung mit aufgenommen.

Die Rasterungseinrichtung 47 weist einen Eingang 48 zum Aufnehmen der zu rasternden Bilddaten und zwei Ausgänge 49, 50 zum Ausgeben der gerasterten Bilddaten auf. Der Ausgang 49 ist mit der Anzeigeeinrichtung 44 und der Ausgang 50 mit Druckern 51 -53 verbunden.

Das Dokument-Erzeugungs- und Überprüfungssystem 40 und das Druckproduktionssystem 41 sind physikalisch mit einer Datenleitung verbunden, die Bestandteil eines lokalen Netzwerkes LAN oder eines überörtlichen Netzwerkes WAN sein kann. In Fig. 18 sind zur Vereinfachung lediglich der Datenstrom 54 von der Dokument-Erzeugungseinrichtung 42 zur Druckdatenstromkonverter 46 und der Datenstrom 55 von der Rasterungseinrichtung 47 zu Anzeigeeinrichtung 44 dargestellt.

Nachfolgend wird die Funktionsweise des erfindungsgemäßen Gerätesystems nach Fig. 18 erläutert.

Ein Benutzer 56 erstellt mit Hilfe der Dokument-Erzeugungseinrichtung 42 eine zu druckende Dokumentdatei.

Diese Dokumentdatei wird von der Dokument-Erzeugungseinrichtung 42 in eine Druckdatei im Format PCL, PostScript (PS), Windows Meta Format (WMF) oder einem anderen beliebigen Druckformat erstellt und an den Druckdatenstromkonverter 46 gesandt. Der Druckdatenstromkonverter 46 wandelt den eingehenden Druckdatenstrom in einen Druckdatenstrom mit einheitlichem Format um und leitet ihn an die Rasterungseinrichtung 47 weiter. Hier wird die Dokumentdatei gerastert und in eine Kontrolldatei in einem Standardformat von Bilddateien, wie z.B. TIFF oder PDF umgesetzt. Diese Umsetzung kann bei einer einfachen Ausführungsform der Erfindung lediglich eine Umsetzung der entsprechenden Formate beinhalten. Bei einer bevorzugten Ausführungsform werden jedoch die Bilddaten nach Maßgabe vorbestimmter physikalischer Druckerscheinungen überarbeitet. So kann die Papierdicke und Faltung beim Herstellen eines gebundenen Druckexemplars berücksichtigt werden, wodurch das Druckbild auf den einzelnen Seiten unterschiedlich versetzt wird. Andererseits kann eine Schrumpfung des Papiers beim Druckvorgang entsprechend korrigiert werden.

Diese Kontrolldatei wird zur Anzeigeeinrichtung 44 gesandt und kann vom Benutzer 56 betrachtet werden. Da die Kontrolldatei aus den gerasterten Bilddaten abgeleitet wird, ist deren Inhalt identisch zu einem physikalischen Ausdruck auf Grundlage dieser gerasterten Bilddaten. Der Benutzer erhält somit eine vollständige WYSIWYG-Darstellung auf der Anzeigeeinrichtung 44 des potentiellen Ausdrucks. Dies wird dadurch erzielt, da die Kontrolldatei auf den gerasterten Bilddaten beruht, die bereits alle druckerspezifischen Eigenheiten beinhalten, so dass der physikalische Ausdruck dieser Daten keine oder nur äußerst geringe Änderungen hervorruft.

Entspricht die Darstellung auf der Anzeigeeinrichtung 44 den Anforderungen des Benutzers, so gibt er an der Eingabeeinrichtung 43 einen Freigabebefehl ein, der an die Rasterungseinrichtung 47 weitergeleitet wird. Auf Grundlage dieses Freigabebefehls werden die entsprechenden gerasterten Bildda an einem Drucker 51, 52, 53 übertragen, wo der Druckdatenstrom auf einen Aufzeichnungsträger, der in der Regel ein Papierbogen ist, gedruckt wird.

Im Rahmen der Erfindung ist es selbstverständlich möglich mehrere Dokument-Erzeugungs- und Überprüfungssystem 40 mit einem Druckproduktionssystem 41 zu verbinden, wobei die Dokument-Erzeugungs- und Überprüfungssysteme 40 Druckdaten in unterschiedlichsten Formaten erzeugen können, sofern sie von dem Druckdatenstromkonverter 46 umgesetzt werden können.

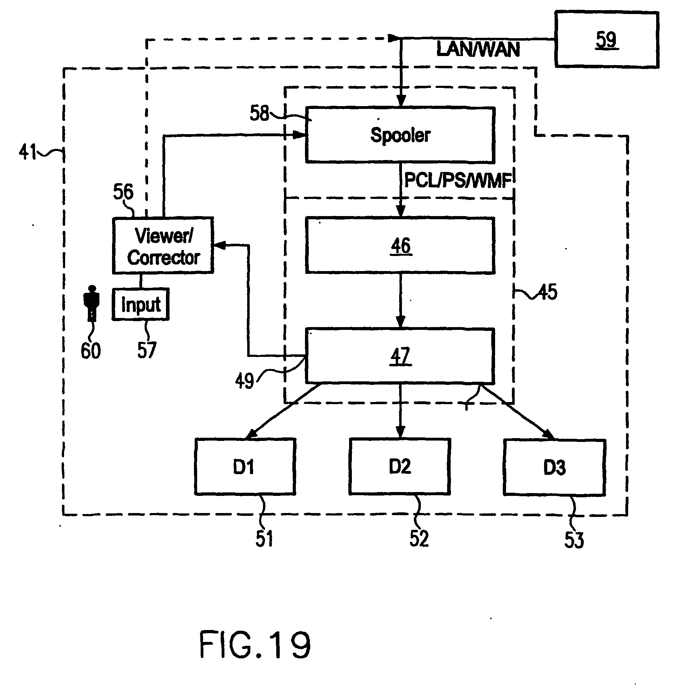

Fig. 19 zeigt ein weiteres Ausführungsbeispiel eines erfindungsgemäßen Gerätesystems.

Dieses Gerätesystem weist wiederum ein Druckproduktionssystem 41 mit einem Druckserver 45 und drei Drucker 51 - 53 auf. Der Druckserver 45 umfaßt eine Rasterungseinrichtung 47 und einen Druckdatenstromkonverter 46 und besitzt die gleiche Funktionalität wie bei dem in Fig. 18 gezeigten Ausführungsbeispiel. Der Ausgang 49 der Rasterungseinrichtung 47 ist jedoch mit einer Anzeigeeinrichtung 56 verbunden, die Bestandteil des Druckproduktionssystems 41 ist. An die Anzeigeeinrichtung 56 ist eine Eingabeeinrichtung 57 angeschlossen.

Das Druckproduktionssystem 41 weist eine Spoolereinrichtung 58 auf, die zum Zwischenspeichern von Dokumentdateien dient. Die Spoolereinrichtung 58 ist über ein lokales Netzwerk LAN oder ein überörtliches Netzwerk WAN mit einem oder mehreren Dokument-Erzeugungseinrichtungen 59 verbunden. Weiterhin weist die Spoolereinrichtung 58 eine Verbindung zur Anzeigeeinrichtung 56 auf.

Nachfolgend wird die Funktionsweise des in Fig. 19 gezeigten Gerätesystems erläutert.

Eine von der Dokument-Erzeugungseinrichtung 59 erzeugte Dokumentdatei wird zunächst in der Spoolereinrichtung 58 zwischengespeichert und dann von der Spoolereinrichtung 58 an den Druckdatenstromkonverter 46 weitergeleitet. Der Druckdatenstromkonverter 46 wandelt die in unterschiedlichen Formaten eingehenden Dokumentdateien in einen einheitlichen Druckdatenstrom.

Dieser Druckdatenstrom wird von der Rasterungseinrichtung 47 gerastert und in eine Kontrolldatei in einem Standardformat von Bilddateien, wie z.B. TIFF oder PDF umgesetzt. Diese Kontrolldatei wird zur Anzeigeeinrichtung 56 gesandt und kann von einem Operator 60 des Druckproduktionssystems 41 betrachtet werden.

Der Operator kann Fehler an der Darstellung der Kontrolldatei erkennen, wobei er bestimmte Fehler, wie z.B. Abweichungen bei der Passergenauigkeit, selbständig durch eine Eingabe an der Eingabeeinrichtung 57 korrigieren kann. Ein entsprechender Korrekturbefehl wird an die Spoolereinrichtung 58 weitergeleitet, nach dessen Maßgabe die zwischengespeicherte Dokumentdatei korrigiert wird. Sie wird dann erneut konvertiert und gerastert und in eine Kontrolldatei umgesetzt und an der Anzeigeeinrichtung 56 zur Anzeige gebracht, bis der Operator einen Freigabebefehl erteilt. Auf diesen Freigabebefehl werden die gerasterten Bilddaten einem der drei Drucker 51 - 53 zugeführt und ausgedruckt.

Stellt der Operator beim Betrachten der Kontrolldatei einen Fehler fest, den er nicht selbständig beheben kann, wie z.B. eine offensichtliche Unrichtigkeit im Inhalt eines Textes, so kann er, falls die Anzeigeeinrichtung an das lokale oder überörtliche Netzwerk angeschlossen ist, eine entsprechende Meldung für einen Benutzer der Dokument-Erzeugungseinrichtung 59 absetzen und ihm auf diesen Fehler hinweisen.

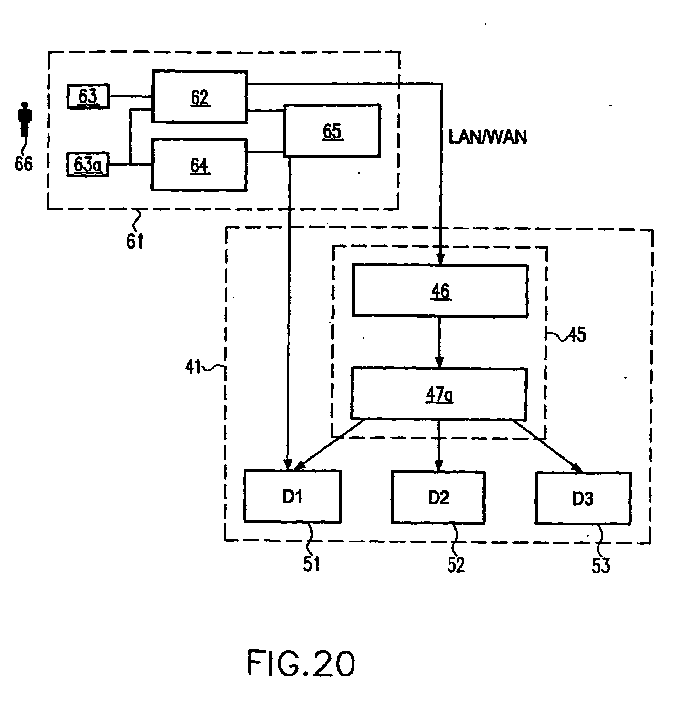

Fig. 20 zeigt ein weiteres Ausführungsbeispiel eines erfindungsgemäßen Gerätesystems. Dieses weist ein herkömmliches Druckproduktionssystem 41 mit einem Druckserver 45 und drei Druckern 51 - 53 auf. Der Druckserver ist mit einer Rasterungseinrichtung 47a und einem Druckdatenstromkonverter 46 versehen, wobei diese Rasterungseinrichtung 47a nicht zur Erstellung einer Kontrolldatei ausgebildet ist.

Dieses Druckproduktionssystem 41 ist über ein lokales Netzwerk LAN oder ein überörtliches Netzwerk WAN mit einem Dokument-Erzeugungs- und trberprüfungssystem 61 verbunden. Dieses Dokument-Erzeugungs- und Überprüfungssystem 61 weist wiederum eine Dokument-Erzeugungseinrichtung 62, eine Eingabeeinrichtung 63, eine Anzeigeeinrichtung 64 und einen Monitor 63a auf. Die Dokument-Erzeugungseinrichtung 62 und die Anzeigeeinrichtung 64 sind mit einem Rasterungssimulationsmodul 65 verbunden.

Das Rasterungssimulationsmodul 65 ist eine Hardwareschaltung, die der Einheit aus dem Druckdatenstromkonverter 46 und der Rasterungseinrichtung 47a des Druckproduktionssystems 41 nachgebildet ist und die von der Dokument-Erzeugungseinrichtung erzeugten Dokumentdateien in identischer Weise wie die Rasterungseinrichtung 47a aufrastert und in eine Kontrolldatei in einem Standardformat von Bilddateien, wie z.B. TIFF oder PDF, umsetzt. Diese Kontrolldatei wird mittels der Anzeigeeinrichtung 64 am Monitor 43a dargestellt. Ein Benutzer 66 des Rasterungssimulationsmodul 65 kann dann anhand der WYSIWYG-Darstellung am Monitor 63a Fehler erkennen und sie durch eine entsprechende Eingabe korrigieren. Erst wenn der Benutzer die Dokumentdatei geprüft hat, sendet er sie über das Netzwerk zum Druckproduktionssystem, an dem sie ausgedruckt wird.

Bei diesem Ausführungsbeispiel können die vom Rasterungssimulationsmodul 65 aufgerasterten Druckdaten unmittelbar einem der Drucker 51 zugeführt werden (Fig. 20).

Im Rahmen der Erfindung ist es auch möglich, das Rasterungssimulationsmodul 65 als Computerprogrammmodul auszubilden.

Die Ausführungsform mit einem Rasterungssimulationsmodul 65 weist gegenüber den in Fig. 18 und 19 dargestellten Ausführungsbeispielen den Vorteil auf, dass die Erstellung der Kontrolldatei am Dokument-Erzeugungs- und Überprüfungssystem 61 erfolgt, wodurch dem Benutzer die Kontrolldatei wesentlich schneller zur Verfügung steht. Da hierbei die Rasterungseinrichtung 46 simuliert wird, ist jedoch darauf zu achten, dass immer eine exakte Abbildung der Rasterungseinrichtung 46 mit allen Einstellungen der damit verbundenen Drucker vorliegt. Dies wird bspw. durch regelmäßige Abfragen des Status der Rasterungseinrichtung 46 und der angeschlossenen Drucker 51 - 53 bewerkstelligt.

Bei den Ausführungsformen nach Fig. 18 und 19 ist hingegen vorteilhaft, dass systemimmanent immer die tatsächlichen Einstellungen für die Rasterung zur Ausbildung der Kontrolldatei vorliegen.

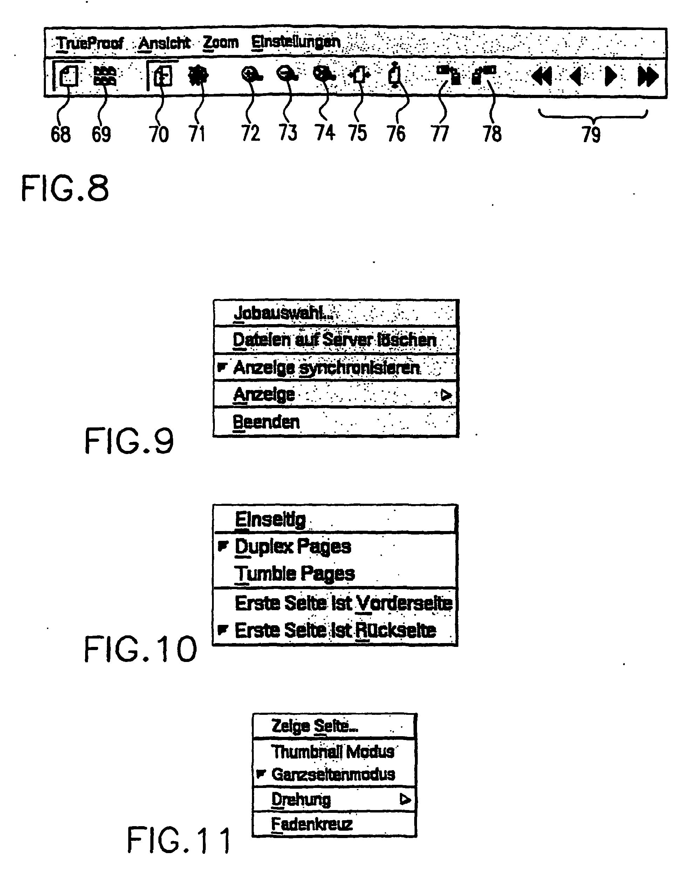

Nachfolgend wird anhand von in den Fig. 8 bis 17 gezeigten Menüausschnitten eines Computerprogramms zum visuellen Überprüfen und Steuern eines Druckdatenstroms einige wesentliche Bedienungsschritte und Funktionen dieses Computerprogrammes erläutert. Dieses Computerprogramm entspricht der Ausführungsform nach Fig. 20, wobei das Rasterungssimulationsmodul als Softwaremodul realisiert ist. Die mit dem Rasterungssimulationsmodul erstellten Kontrolldateien werden sowohl für den erfindungsgemäßen Preview als auch für eine Speicherung in einem Archiv verwendet.

Fig. 8 zeigt ein Haupt-Menü 67 mit folgenden Icons:
- 68: Einzelseite anzeigen
- 69: Thumbnails anzeigen
- 70: Durchscheinender Modus Ein/Aus
- 71: Marke löschen
- 72: Hineinzoomen
- 73: Herauszoomen
- 74: Mit 100% anzeigen
- 75: Seite horizontal einpassen
- 76: Seite vertikal einpassen
- 77: 90° gegen den Uhrzeigersinn drehen
- 78: 90° im Uhrzeigersinn drehen
- 79: Seitenwechsel (erste Seite, vorhergehende Seite, nächste Seite, letzte Seite)

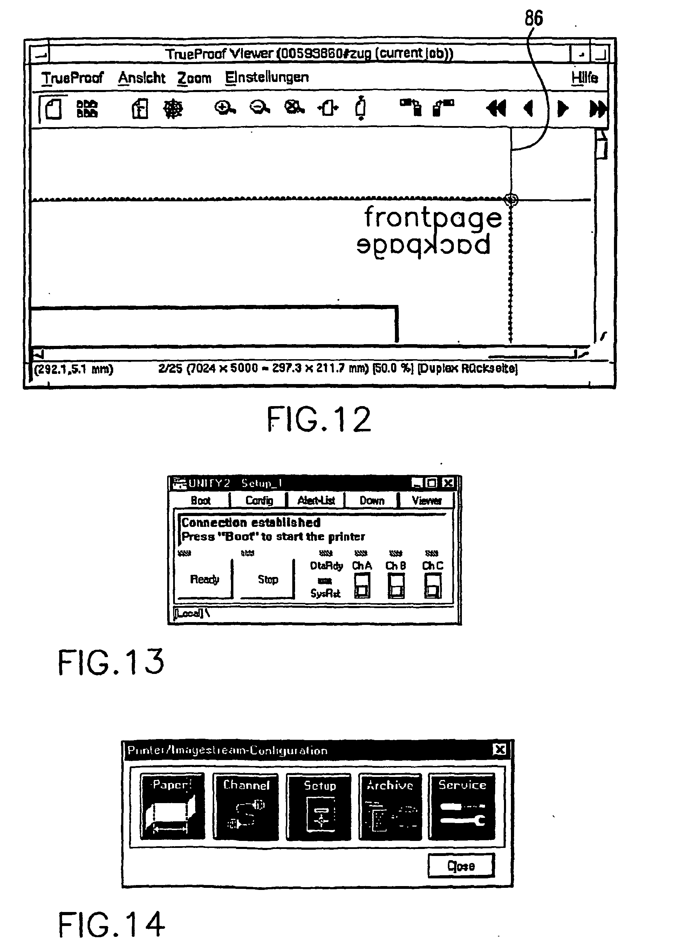

Mit dem Icon 70 kann ein sogenannter durchscheinender Modus eingeschaltet werden. Hierbei wird bei einem DuplexDruck die Rückseite gleichzeitig mit der Vorderseite dargestellt (Fig. 12). Bei einem Simplex-Druck werden die auf eine aktuelle Seite folgende Simplexseite bzw. folgenden Simplexseiten dargestellt.

Zusätzlich wird ein an der Anzeigevorrichtung verschiebbares Prüfmittel 86 dargestellt. Das Prüfmittel ist im vorliegenden Ausführungsbeispiel ein Fadenkreuz 86. Mit Hilfe dieses Fadenkreuzes 86 wird die Passergenauigkeit bzw. Registerhaltigkeit überprüft. Hierzu wird das Fadenkreuz 86 an einer durch den Rand der angezeigten Druckdaten vorgegebenen Position positioniert und fixiert. Das Positionieren des Fadenkreuzes erfolgt durch Positionieren eines Mauszeigers bei gedrückter Shift-Taste und Drücken der linken Maustaste.

Dann wird die Rückseite (Duplexdruck) zur Anzeige gebracht und deren Position relativ zum fixierten Prüfmittel festgestellt. Dies erfolgt, indem das Fadenkreuz am Rand der Rückseite positioniert und fixiert. Der verschiebeweg (Shift) zwischen diesen beiden Positionen wird numerisch Ausgegeben und kann zum Korrigieren Der Passergenauigkeit vom Benutzer verwendet werden.

Das Fadenkreuz kann auch bei einer weiteren Kontrolldatei erhalten bleiben, so dass eine Vergleichsmöglichkeit über mehrere Dateien hinweg geschaffen wird.

Die DE 100 17 928.2 beschreibt ein Verfahren zur Korrektur von Druckdaten in einem Preview mit einem entsprechenden Prüfmittel. Der Inhalt dieser Patentanmeldung wird unter Bezugnahme in die vorliegende Beschreibung aufgenommen. Bei den oben erläuterten Verfahren zur Erzeugung der Kontrolldatei wird vorzugsweise ein Korrekturschritt eingeführt, der die Verschiebung des Druckbildes augrund der Faltung des Aufzeichnungsträgers und/oder der Papierschrumpfung berücksichtigt und das Druckbild in der Korrekturdatei entsprechend verschiebt.

Im Hauptmenü (Fig. 8) sind folgende Untermenüs angegeben: TrueProof
Ansicht
Zoom
Einstellungen

Das Untermenü TrueProof (Fig. 9) enthält die folgenden Funktionen:
Jobauswahl
Dateien auf Server löschen
Anzeige synchronisieren
Anzeige
Beenden

Über die Funktion "Jobauswahl" kann ein bestimmter Druckauftrag ausgewählt und angezeigt werden. Es können nur die Druckaufträge, die auf einem entsprechenden Server gespeichert sind, ausgewählt werden.

Mit der Funktion "Dateien auf Server löschen" können markierte gespeicherte Druckaufträge auf dem TrueProof Server gelöscht werden.

Mit der Funktion "Anzeige synchronisieren" wird ein Modus eingestellt, mit dem die aufgerasterten Seiten des aktuellen Auftrags kontinuierlich angezeigt werden. In der Grundeinstellung ist die Option "Anzeige synchronisieren" eingeschaltet.

Die Option "Anzeige" öffnet ein weiteres Untermenü (Fig. 10), mit dem die einzelnen Seiten im Seitenlayout Simplex, Duplex und Tumble angezeigt werden können. Außerdem kann der Anwender wählen, ob er die erste Seite als Vorderseite oder als Rückseite betrachten will.

Die Einstellung "Erste Seite Vorder- oder Rückseite" ist erforderlich, da die Anzeigeeinrichtung die Seiten ohne Information über Vorder- oder Rückseite übermittelt bekommt.

Eine gewählte Option gilt für den gesamten Auftrag. Sollte dieser intern einen Wechsel besitzen, wie z.B. Mixplex (Layout Wechsel Simplex/Duplex oder Tumble oder umgekehrt), muß die Einstellung "Erste Seite Vorder- oder Rückseite" entsprechend vorgenommen werden.

Die einzelnen Seiten können mit durchscheinender Rückseite bzw. bei Simplex mit der nächsten Simplexseite auf der Rückseite dargestellt werden.

Mit der Funktion "Beenden" wird das Fenster der Anzeigeeinrichtung geschlossen.

Über das Menü Ansicht (Fig. 11) können die Optionen der Seitendarstellung beeinflußt werden.

### "Zeige Seite"

Mit dieser Option kann eine bestimmte Seite zur Darstellung ausgewählt werden.

### "Thumbnail Modus"

Im Thumbnail Modus werden alle Seiten des Dokuments als Übersicht bereitgestellt.

### "Ganzseitenmodus"

Im Ganzseitenmodus wird eine ausgewählte Seite dargestellt. In diesem Modus ist die Auswahl der Betrachtungsoptionen (z.B. Zoomen, Drehen) freigeschaltet.

### "Drehung"

Die einzelnen Seiten können in 90° Schritten dargestellt werden. Wird ein neuer Auftrag geladen, wird die Originallage der Seite aufgezeigt.

### "Fadenkreuz"

Im aktiven Zustand wird ein Fadenkreuz auf die Darstellung gelegt. Damit läßt sich die Position einzelner Rasterpunkte bestimmen. Die Positionswerte werden in einer Statuszeile ausgegeben.

Bevor ein Auftrag für Druck-Server abgesetzt werden kann, bei dem die visuelle Vorabkontrolle möglich sein soll, müssen die entsprechenden Drucker konfiguriert und gebootet werden.

Ein Bedienfeld (Fig. 13) kann geöffnet werden. Die Konfiguration eines Druckers wird über das Menü 'Config' in diesem Bedienfeld vorgenommen. Der Bootvorgang muß nicht unbedingt mit der gewünschten Emulation vorangegangen sein. Grundsätzlich können Einstellungen nur im 'NOT READY' und/oder im Offline Zustand ( Kanal Ch A inaktiv) vorgenommen werden. Im Status 'READY' können alle Parametereinstellungen eingesehen werden.

Die Vorgaben für Paper, Channel, Setup und Imagestream Archive werden mit dem in Fig. 14 gezeigten Bedienfeld vorgenommen. Einmal festgelegte Vorgaben können in einem Setup gespeichert werden.

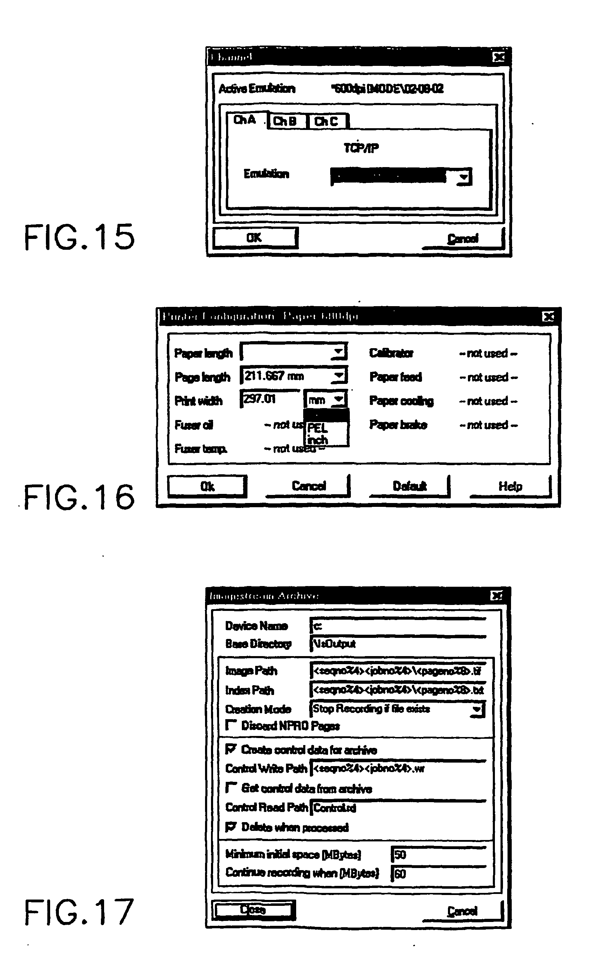

Einstellungen der Emulation können mit dem in Fig. 15 gezeigten Bedienfeld vorgenommen werden. Sie sind immer dem Kanal A zuzuordnen. Als Drucker-Emulation stehen die I- und PCL-Modes für 240 dpi, 300 dpi und 600dpi zur Verfügung.

Die eingestellte und nach einem Bootvorgang vorhandene Emulation wird unter 'Active Emulation' angezeigt. Wurden Änderungen durchgeführt, die eine andere Emulation voraussetzen, wird die Boot Aufforderung "Please boot the controller" ausgegeben. Wird die Emulation geändert, so muß ein Druckerboot durchgeführt werden.

Mit dem in Fig. 16 gezeigten Bedienfeld kann das Papierformat eingestellt werden. Bei der Einstellung der Papiergröße muß beachtet werden, daß die bedruckbare Seitenbreite angegeben wird. Das heißt, daß bei einem Endlospapier mit Lochrand 1 inch von der Gesamtbreite abgezogen werden muß.

Die Papierformatangaben können in mm, PEL oder inch angegeben werden. Die Auswahl erfolgt durch markieren der entsprechenden Einheit. Die Seitenlänge (Page length) kann in 1/6 inch-Schritten unabhängig der eingestellten Einheit ausgewählt werden. Die Druckbereichbreite Print width kann den geforderten Gegebenheiten angepaßt werden. Die Angaben in Pels beziehen sich auf die eingestellte Emulationseinstellung. Mit OK werden die eingestellten Werte übernommen.

Mit dem in Fig. 17 gezeigten Bedienfeld können Einstellungen eines "Imagestream Archives" vorgenommen werden. Die Einstellparameter stehen nach einem Boot eines Druckers zur Verfügung und können modifiziert werden. Nach einer Modifikation stehen diese nach einem Neustart des Computerprogrammsystems zum visuellen Überprüfen und Steuern zeine Druckdatenstroms bereit.

In dem in Fig. 17 abgebildeten Bedienfeld brauchen im Normalfall keine Einstellungen vorgenommen werden. Falls für die Ablage der Ausgabedateien eine andere Festplatte (Partition) verwendet werden soll, muß im Feld Device Name und/oder Base Directory die entsprechende Angabe gemacht werden. Das Feld "Minimum initial Space" definiert den Grenzwert, bei dessen Unterschreiten das Rasterungssimulationsmodul gestoppt wird. Das Feld "Continue recording when" definiert die Schwelle bei der die Aufzeichnung wieder fortgesetzt wird. Wenn sich der Füllstand zwischen beiden Werten befindet, dann wird bei der Prüfung der Füllstand im System-Panel angezeigt. Wenn wieder genug Platz auf dem Archiv-Laufwerk vorhanden ist, dann wird Rasterungssimulationsmodul automatisch wieder fortgesetzt.

### Bezugszeichenliste

- 1: Hochleistungsdrucksystem
- 2: Datennetzwerk
- 3: Terminal
- 3a: Bildschirm
- 4: Main Frame
- 4a: Bildschirm
- 5: Bandlesegerät
- 6: Hochleistungsdrucker
- 7: Drucker
- 8: Druckserver
- 8a: Bildschirm
- 9: Archivserver
- 9a: Bildschirm
- 10: Bandlesegerät
- 11: Verbindung
- 12: Verbindung
- 13: Drucker
- 14: Drucker
- 14a: Bildschirm
- 15: lokales Netzwerk
- 16: Archivspeicher
- 16a: Bildschirm

- 20: Spooler
- 21: Administrator-Einheit
- 22: Spool-Datei
- 23: Archivierungskomponente
- 24: Arbeitsplatz
- 25: Druckproduktionsprogramm
- 26: Druck-Job-Manager
- 27: Anzeigeprogramm
- 28: FC-Modul
- 29: IS-Modul
- 30: Bedienfeld
- 31: Linie
- 32: Dämon
- 33: Steuersystem
- 34: Drucker
- 35: Druck-Job-Manager
- 36: Steuerungsmodul
- 37: Druckproduktionsprogramm
- 38: Druckdatenstromkonverter
- 39: Rastereinrichtung
- 40: Dokument-Erzeugungs- und Überprüfungssystem
- 41: Druckproduktionssystem
- 42: Dokument-Erzeugungseinrichtung
- 43: Eingabeeinrichtung
- 44: Anzeigeeinrichtung
- 45: Druckserver
- 46: Druckdatenstromkonverter
- 47: Rastereinrichtung
- 48: Eingang
- 49: Ausgang
- 50: Ausgang
- 51: Drucker
- 52: Drucker
- 53: Drucker
- 54: Datenstrom
- 55: Datenstrom
- 56: Anzeigeeinrichtung
- 57: Eingabeeinrichtung
- 58: Spoolereinrichtung
- 59: Dokument-Erzeugungseinrichtung
- 60: Operator
- 61: Dokument-Erzeugungs- und Überprüfungssystem
- 62: Dokument-Erzeugungseinrichtung
- 63: Eingabeeinrichtung
- 64: Anzeigeeinrichtung.
- 65: Rasterungssimulationsmodul
- 66: Benutzer
- 67: Hauptmenü
- 68: Einzelseite anzeigen
- 69: Thumbnails anzeigen
- 70: Durchscheinender Modus Ein/Aus
- 71: Marke löschen
- 72: Hineinzoomen
- 73: Herauszoomen
- 74: Mit 100% anzeigen
- 75: Seite horizontal einpassen
- 76: Seite vertikal einpassen
- 77: 90° gegen den Uhrzeigersinn drehen
- 78: 90° im Uhrzeigersinn drehen
- 79: Seitenwechsel
- 80: Verteilungsmodul
- 81: e-commerce-modul
- 82: Anzeigemodul
- 83: Archivierungssystem
- 84a: Druckproduktionssystem
- 84b: Druckproduktionssystem
- 84c: Druckproduktionssystem
- 85: Überwachungsmodule
- 86: Prüfmittel
- 87: erste Komponente
- 88: Archiv
- 89: Anzeigemodul
- 90a: Anzeigeprogramm
- 90b: Anzeigeprogramm
- 91: Rastereinrichtung
- 92: Zeichengenerator
- 93: Fotoleitertrommel
- 94: Papierbogen
- 95: Datenspeicher
- 96: BUC-Controller
- 97: Bedienfeld
- 98: Aggregaten
- 100: Archivspeicher
- 101: Web-Server
- 102: Konvertierungs-, Indizierung- und Sortierungssystem CIS
- 103: Benutzerinterface
- 104: Spooling-Modul
- 105: Konvertierungsmodul
- 106: PDF-Konverter
- 107: Aufzeichnungsprozess-Korrekturmodul
- 108: Konvertierungsmodul

- 110: Interface
- 111: Datenquelle
- 112: Print-Server-System

## Patentansprüche

1. Verfahren zum visuellen Überprüfen eines in einer Druckdatensprache (AFP, PCL, PS) vorliegenden Druckdatenstroms, der für eine punktweise Wiedergabe auf einem Druckgerät einem Druck-Rasterprozess in einer Rastereinrichtung im Druckgerät zu unterziehen ist, wobei die gerasterten Druckdaten an einen Zeichengenerator weiter geleitet werden, und der Druckdatenstrom zur visuellen Überprüfung einem Anzeige-Rasterprozess unterzogen wird, der von einer Rastereinrichtung ausgeführt wird, deren Raster-Regeln mit den Raster-Regeln der Rastereinrichtung des Druckgerätes übereinstimmen und somit genau dem Druck-Rasterprozess entspricht und wobei die gerasterten Daten des Anzeige-Rasterprozesses auf einem elektronischen vom Druckgerät physikalisch getrennten Anzeigemedium (Bildschirm, e-paper) dargestellt werden, wobei zur Überprüfung der Registerhaltigkeit von Vorder- und Rückseiten des Aufzeichnungsträgers jeweils zusammengehörige Daten zweier Seiten gemeinsam und überlagert auf dem Anzeigemedium dargestellt werden, wobei an den gerasterten Daten des Anzeige-Rasterprozesses eine Korrektur von während des Aufzeichnungsprozesses hervorgerufenen Abweichungen gegenüber einem vorgegebenen Druckbild vorgenommen wird, bevor diese angezeigt werden.

2. Verfahren nach einem der vorhergehenden Ansprüche, wobei für den Anzeige-Rasterprozess die gleichen, druckgerätspezifischen Einstellungen (print width, Paper size, fuser oil) vorgenommen werden wie für den Druck-Rasterprozess.

3. Verfahren nach einem der vorhergehenden Ansprüche, wobei die Druckdaten in einem von vielen möglichen verschiedenen Druckdatensprachen (AFP, LCDS, PCL, PS) an ein Druckdaten-Produktionssystem übertragen werden, dem Anzeige-Rasterprozess unterzogen, dann zur Anzeige und Überprüfung gebracht, zum Durchlaufen des Druck-Rasterprozesses an einen Druck-Rasterprozessor übertragen und dann im Druckgerät ausgedruckt werden.

4. Verfahren nach Anspruch 3, wobei das Druckdaten-Produktionssystem mit einem die Anzeige steuernden Anzeigeprogramm-Modul derart funktionell gekoppelt ist, dass die auf dem Druckdaten-Produktionssystem und/oder am Druckgerät bearbeiteten Daten zumindest auftragsweise, insbesondere seitengenau, zeitgleich und automatisch am Anzeige-Programm-Modul sind.

5. Verfahren nach Anspruch 4, wobei das Anzeigeprogramm-Modul automatisch ein Anzeigeprogramm (PDV, PDF-Viewer) aufruft, wenn eine im Anzeige-Rasterprozess gerasterte Datei vorliegt.

6. Verfahren nach einem der Ansprüche 1 bis 5, wobei die zur Rückseite einer Seite gehörende Information jeweils zur Vorderseite gehörenden Information unterscheidbar, insbesondere farblich **gekennzeichnet**, dargestellt wird.

7. Verfahren nach einem der Ansprüche 1 bis 6, wobei zur Überprüfung der Registerhaltigkeit von Vorder- und Rückseiteninformationen ein bewegbares Prüfmittel auf dem Anzeigemedium angezeigt wird.

8. Verfahren nach einem der vorhergehenden Ansprüche, wobei die Druckdaten in einem Druck-Produktionssystem auftrags- und seitenweise bearbeitet und an ein Druckgerät gesandt werden, wobei in einem Kontroll-System jeweils die aktuell am Druckgerät zum Ausdruck anstehende Seiteninformation angezeigt wird.

9. Computerprogrammprodukt, das bei seinem Laden und Ablaufen auf einem Computer einen Verfahrensablauf nach einem der vorhergehenden Ansprüche bewirkt.

10. Druckgerätesystem, das zum Durchführen des Verfahrens nach einem der Ansprüche 1 bis 8 ausgebildet ist, mit einer Rastereinrichtung (39, 47, 47a, 91) zum Rastern von Druckdaten zum Drucken auf einem Drucker (51- 53), einer Anzeigeeinrichtung (44, 64) zum Anzeigen der gerasterten Druckdaten und
einer Einrichtung (42, 56, 59) zum Ändern der Druckdaten, wobei
die Rastereinrichtung (47a) in einem Druckproduktionssystem angeordnet ist und die Anzeigeeinrichtung in einem Dokument-Erzeugungs- und Überprüfungssystem (40) vorgesehen ist, wobei das Dokument-Erzeugungs- und Überprüfungssystem (40) ein Rasterungssimulationsmodul (65) aufweist, das Druckdaten nach den gleichen Rasterungsregeln wie die Rastereinrichtung (47) rastert, wobei die Rastereinrichtung (47) ein Aufzeichnungsprozess-Korrekturmodul (107) zur Korrektur von während des Aufzeichnungsprozesses hervorgerufener Abweichungen gegenüber einem vorgegebenen Druckbild aufweist.

11. Druckgerätesystem nach Anspruch 10, wobei die Anzeigeeinrichtung (64) eine Datenverbindurig zum Rasterungssimulationsmodul (65) aufweist, um die vom Rasterungssimulationsmodul (65) gerasterten Druckdaten zu empfangen und anzuzeigen.

12. Druckgerätesystem nach Anspruch 10 oder 11, wobei das Rasterungssimulationsmodul (65) eine Hardwareschaltung mit der gleichen Funktionalität wie die Rastereinrichtung (47) ist.

13. Druckgerätesystem nach Anspruch 10 oder 11, wobei das Rasterungssimulationsmodul (65) ein Softwaremodul mit der gleichen Funktionalität wie die Rastereinrichtung (47) ist.

14. Druckgerätesystem nach einem der Ansprüche 10 bis 13, wobei das Rasterungssimulationsmodul (65) ein Aufzeichnungsprozess-Korrekturmodul (107) zur Korrektur von während des Aufzeichnungsprozesses hervorgerufener Abweichungen gegenüber einem vorgegebenen Druckbild aufweist.

15. Druckgerätesystem nach einem der Ansprüche 10 bis 14, wobei
ein Ausgang der Rastereinrichtung (47) mit der Anzeigeeinrichtung (44, 56) zum Übermitteln einer Korrekturdatei verbunden ist, die die von der Rasterungseinrichtung (47) gerasterten Druckdaten enthält.

16. Druckgerätesystem nach Anspruch 15, wobei die Anzeigeeinrichtung (44) Bestandteil eines Dokument-Erzeugungs- und Überprüfungssystems (40) ist.

17. Druckgerätesystem nach Anspruch 15, wobei die Anzeigeeinrichtung (56) Bestandteil eines Druckproduktionssystems (41) ist.

## Claims

1. Method to visually check a print data stream existing in a print data language (AFP, PCL, PS) that is to undergo a print raster process in a raster device in the print device for a point-by-point reproduction on a print device, wherein the rastered print data are forwarded to a character generator and, for visual checking, the print data stream undergoes a display raster process which is executed by a raster device whose raster rules conform with the raster rules of the raster device of the print device, and thus precisely corresponds to the print raster process, and wherein the rastered data of the display raster process are shown on an electronic display medium (monitor, e-paper) which is physically separate from the print device, wherein to check the register accuracy of front and back sides of the recording medium, data of two pages belonging together are respectively shown together and overlaid on the display medium, wherein the rastered data of the display raster process undergo a correction of variations ensuing during the recording process with regard to a predetermined print image before these rastered data are displayed.

2. Method according to any of the preceding claims, wherein the same print device specific settings (print width, paper size, fuser oil) are undertaken for the display raster process as for the print raster process.

3. Method according to any of the preceding claims, wherein the print data in any of many possible different print data languages (AFP, LCDS, PCL, PS) are transmitted to a print data production system, undergo the display raster process, then are displayed and checked, transmitted for implementation of the print raster process to a print raster processor, and are then printed out in the print device.

4. Method according to claim 3, wherein the print data production system is functionally coupled with a display program module controlling the display such that the data processed on the print data production system and/or on the print device are at least job-by-job, in particular page-perfect, simultaneously and automatically on the display program module.

5. Method according to claim 4, wherein the display program module automatically invokes a display program (PDV, PDF viewer) when a file rastered in the display raster process is present.

6. Method according to any of the claims 1 to 5, wherein the information pertaining to the back side of a page is shown respectively differentiable from the information pertaining to the front side, in particular distinguished in colour.

7. Method according to any of the claims 1 to 6, wherein to check the register accuracy of front and back side information, a movable test means is displayed on the display medium.

8. Method according to any of the preceding claims, wherein the print data are processed job-by-job and page-by-page in a print production system and transmitted to a print device, wherein the current page information present in the print device for printing is respectively displayed in a monitoring system.

9. Computer program product, that, given its loading and running on a computer, effects a method process according to any of the preceding claims.

10. Print device system, which is designed for implementing the method according to one of the claims 1 to 8, comprising
a raster device (39, 47, 47a, 91) to raster print data for printing on a printer (51-53),
a display device (44, 64) to display the rastered print data, and
a device (42, 56, 59) to change the print data, wherein the raster device (47a) is arranged in a print production system and the display device is provided in a document generation and checking system (40), wherein the document generation and checking system (40) comprises a rastering simulation module (65) that rasters print data according to the same raster rules as the raster device (47), wherein the raster device (47) comprises a recording process correction module (107) to correct variations ensuing during the recording process with regard to a predetermined print image.

11. Print device system according to claim 10, wherein the display device (64) comprises a data connection to the rastering simulation module (65) in order to receive and to display the print data rastered by the rastering simulation module (65).

12. Print device system according to claim 10 or 11, wherein the rastering simulation module (65) is a hardware circuit with the same functionality as the raster device (47).

13. Print device system according to claim 10 or 11, wherein the rastering simulation module (65) is a software module with the same functionality as the raster device (47).

14. Print device system according to any of the claims 10 to 13, wherein the rastering simulation module (65) comprises a recording process correction module (107) to correct variations ensuing during the recording process with regard to a predetermined print image.

15. Print device system according to any of the claims 10 to 14, wherein an output of the raster device (47) is connected with the display device (44, 56) for transmission of a correction file that comprises the print data rastered by the raster device (47).

16. Print device system according to claim 15, wherein the display device (44) is part of a document generation and checking system (40).

17. Print device system according to claim 15, wherein the display device (56) is part of a print production system (41).

## Revendications

1. Procédé de vérification visuelle d'un flux de données d'impression qui est dans un langage de données d'impression (AFP, PCL, PS) et qui doit être soumis à un processus de tramage et d'impression par un dispositif de tramage dans l'appareil d'impression en vue d'une reproduction par points par un appareil d'impression, procédé dans lequel les données d'impression tramées sont acheminées à un générateur de caractères, et le flux de données d'impression est soumis, en vue de la vérification visuelle, à un processus de tramage et d'affichage qui est exécuté par un dispositif de tramage dont les règles de tramage sont conformes aux règles de tramage du dispositif de tramage de l'appareil d'impression et correspondent ainsi précisément au processus de tramage et d'impression, et dans lequel les données tramées du processus de tramage et d'affichage sont représentées sur un média d'affichage électronique (écran, papier électronique), physiquement séparé de l'appareil d'impression, dans lequel des données à chaque fois appariées de deux pages sont représentées en même temps et de façon combinée sur le média d'affichage en vue de vérifier le repérage de pages recto et verso du support d'informations, dans lequel une correction des écarts demandés par rapport à une image d'impression prédéterminée, qui sont générés pendant le processus d'enregistrement d'informations, est effectuée sur les données tramées du processus de tramage et d'affichage avant l'affichage desdits écarts demandés.

2. Procédé selon la revendication précédente, dans lequel on effectue, pour le processus de tramage et d'affichage, les mêmes réglages spécifiques à l'appareil d'impression (largeur d'impression, taille du papier, huile de fixage) que pour le processus de tramage et d'impression.

3. Procédé selon l'une des revendications précédentes, dans lequel les données d'impression, qui sont dans un langage de données d'impression parmi de nombreux langages de données d'impression différents possibles (AFP, LCDS, PCL, PS), sont transmises à un système de génération de données d'impression, soumises au processus de tramage et d'affichage, puis affichées et vérifiées, et transmises à un processeur de tramage et d'impression en vue d'exécuter le processus de tramage et d'impression puis imprimées dans l'appareil d'impression.

4. Procédé selon la revendication 3, dans lequel le système de génération de données d'impression est fonctionnellement couplé à un module de programme d'affichage commandant l'affichage de telle sorte que les données traitées par le système de génération de données d'impression et/ou l'appareil d'impression le soient au moins par lots, notamment exactement par pages, simultanément et automatiquement, par le module de programme d'affichage.

5. Procédé selon la revendication 4, dans lequel le module de programme d'affichage appelle automatiquement un programme d'affichage (PDV, PDF-viewer) lorsqu'un fichier tramé dans le processus de tramage et d'affichage existe.

6. Procédé selon l'une des revendications 1 à 5, dans lequel l'information appartenant au verso d'une page est à chaque fois représentée de façon à pouvoir la différencier de l'information appartenant au recto, notamment en la caractérisant par une couleur.

7. Procédé selon l'une des revendications 1 à 6, dans lequel un moyen de vérification mobile est affiché sur le média d'affichage afin de vérifier le repérage d'informations de recto et de verso.

8. Procédé selon l'une des revendications précédentes, dans lequel les données d'impression sont traitées par lots et par pages dans un système de production et d'impression et sont envoyées à un appareil d'impression, l'information de page actuelle apparaissant sur l'appareil d'impression en vue de l'impression étant à chaque fois affichée dans un système de contrôle.

9. Produit logiciel informatique, qui met en oeuvre, lors de son chargement et son exécution sur un ordinateur, un procédé selon l'une des revendications précédentes.

10. Système d'appareil d'impression, qui est conformé pour mettre en oeuvre le procédé selon l'une des revendications 1 à 8, ledit système d'appareil d'impression comportant
un dispositif de tramage (39, 47, 47a, 91) pour tramer des données d'impression en vue de l'impression par un appareil d'impression (51 à 53),
un dispositif d'affichage (44, 64) pour afficher les données d'impression tramées, et
un dispositif (42, 56, 59) pour modifier les données d'impression,
le dispositif de tramage (47a) étant disposé dans un système de production et d'impression, et le dispositif d'affichage étant prévu dans un système de vérification et de génération de documents (40), le système de vérification et de génération de documents (40) possédant un module de simulation de tramage (65) qui trame des données d'impression conformément aux mêmes règles de tramage que le dispositif de tramage (47), le dispositif de tramage (47) possédant un module de correction de processus d'enregistrement d'informations (107) pour une correction des écarts demandés, par rapport à une image d'impression prédéterminée, qui sont générés pendant le processus d'enregistrement d'informations.

11. Système d'appareil d'impression selon la revendication 10, dans lequel le dispositif d'affichage (64) possède une liaison de données avec le module de simulation de tramage (65) pour recevoir et afficher les données d'impression tramées par le module de simulation de tramage (65).

12. Système d'appareil d'impression selon la revendication 10 ou 11, dans lequel le module de simulation de tramage (65) est un circuit hardware ayant la même fonctionnalité que le dispositif de tramage (47).

13. Système d'appareil d'impression selon la revendication 10 ou 11, dans lequel le module de simulation de tramage (65) est un module software ayant la même fonctionnalité que le dispositif de tramage (47).

14. Système d'appareil d'impression selon l'une des revendications 10 à 13, dans lequel le module de simulation de tramage (65) possède un module de correction de processus d'enregistrement d'informations (107) pour une correction des écarts demandés, par rapport à une image d'impression prédéterminée, qui sont générés lors du processus d'enregistrement d'informations.

15. Système d'appareil d'impression selon l'une des revendications 10 à 14, dans lequel une sortie du dispositif de tramage (47) est reliée au dispositif d'affichage (44, 56) pour transférer un fichier de correction qui contient les données d'impression tramées par le dispositif de tramage (47).

16. Système d'appareil d'impression selon la revendication 15, dans lequel le dispositif d'affichage (44) fait partie d'un système de vérification et de génération de documents (40).

17. Système d'appareil d'impression selon la revendication 15, dans lequel le dispositif d'affichage (56) fait partie d'un système de production et d'impression (41).
